# EUROPEAN PATENT APPLICATION

(11) **EP 4 535 832 A1**
(43) Date of publication of application: **09.04.2025**
(21) Application number: 22943083.0
(22) Date of filing: 24.05.2022
(51) Int. Cl.: H04W 4/02, H04W 64/00

(54) **METHOD AND APPARATUS FOR ACQUIRING POSITION INFORMATION**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/094805
(87) International publication number: WO 2023/225877

(57) **Abstract**

Disclosed in the embodiments of the present disclosure are a method and apparatus for acquiring position information, which can be used in the technical field of communications. The method executed by a network side device comprises: the network side device determining whether a condition for acquiring position information is satisfied; and when it is determined that the condition for acquiring the position information is not satisfied, stopping sending first configuration information to a terminal device, the first configuration information being used for instructing the terminal device to acquire detailed position information. Thus, the terminal device does not receive the first configuration information, therefore it is not necessary to acquire detailed location information, and the energy consumption of the terminal device can be reduced.

## Description

### TECHNICAL FIELD

The present disclosure relates to the field of wireless communication technology, in particular to a location information obtaining method and an apparatus.

### BACKGROUND

**In** the related art, a network side device configures indication information for a terminal device, and the indication information is used to cause the terminal device to report a measurement result carrying Global Navigation Satellite System (GNSS) location information in a case that a report event is met. In a case that the indication information is configured, configuration information for causing the terminal device to obtain detailed location information also needs to be configured.

However, these operations may not be necessary. In a case that the network side device obtains sufficient location data based on available location information for troubleshooting network issues, it is unnecessary to force the terminal device to obtain the detailed position information on its own initiative, because this leads to an increase in the power consumption of the terminal device.

### SUMMARY

An object of the present disclosure is to provide a location information obtaining method and an apparatus, so as to reduce the power consumption of a terminal device.

In a first aspect, the present disclosure provides in some embodiments a location information obtaining method executed by a network side device, including: determining, by the network side device, whether or not a condition for obtaining location information is met; and in response to the condition for obtaining the location information being not met, stopping sending first configuration information to a terminal device. The first configuration information is used to indicate the terminal device to obtain detailed location information.

In this technical solution, the network side device determines whether or not the condition for obtaining the location information is met, and in a case that the condition for obtaining the location information is not met, stops sending the first configuration information to the terminal device. The first configuration information is used to indicate the terminal device to obtain the detailed location information. In this way, the terminal device does not receive the first configuration information, and it is unnecessary for the terminal device to obtain the detailed location information, so it is able to reduce the power consumption of the terminal device.

In a second aspect, the present disclosure provides in some embodiments another location information obtaining method executed by a terminal device, including: receiving first configuration information sent by a network side device. The first configuration information is sent by the network side device in a case that a condition for obtaining location information is met, and the first configuration information is used to indicate the terminal device to obtain detailed location information.

In a third aspect, the present disclosure provides in some embodiments a communication apparatus. The communication apparatus is used to achieve a part of, or all of, functions of the network side device in the method in the first aspect, e.g., the communication apparatus is used to achieve the functions in a part of, or all of, embodiments of the present disclosure, or separately achieve the function in any embodiment of the present disclosure. The functions are implemented through hardware, or through executing corresponding software by hardware. The hardware or software includes one or more units or modules corresponding to the functions.

In one embodiment of the present disclosure, the communication apparatus includes a transceiver module and a processing module. The processing module is configured to support the communication apparatus to achieve the corresponding functions in the method, and the transceiver module is configured to support the communication apparatus to communication with the other device. The communication apparatus further includes a storage module coupled to the transceiver module and the processing module and configured to store therein necessary computer programs and data for the communication apparatus.

In one embodiment of the present disclosure, the communication apparatus includes: a processing module configured to determine whether or not a condition for obtaining location information is met; and a transceiver module configured to, in response to the condition for obtaining the location information being not met, stop sending first configuration information to a terminal device. The first configuration information is used to indicate the terminal device to obtain detailed location information.

In a fourth aspect, the present disclosure provides in some embodiments a communication apparatus. The communication apparatus is used to achieve a part of, or all of, functions of the network side device in the method in the second aspect, e.g., the communication apparatus is used to achieve the functions in a part of, or all of, embodiments of the present disclosure, or separately achieve the function in any embodiment of the present disclosure. The functions are implemented through hardware, or through executing corresponding software by hardware. The hardware or software includes one or more units or modules corresponding to the functions.

In one embodiment of the present disclosure, the communication apparatus includes a transceiver module and a processing module. The processing module is configured to support the communication apparatus to achieve the corresponding functions in the method, and the transceiver module is configured to support the communication apparatus to communication with the other device. The communication apparatus further includes a storage module coupled to the transceiver module and the processing module and configured to store therein necessary computer programs and data for the communication apparatus.

In one embodiment of the present disclosure, the communication apparatus includes: a transceiver module configured to receive first configuration information sent by a network side device. The first configuration information is sent by the network side device in a case that a condition for obtaining location information is met, and the first configuration information is used to indicate the terminal device to obtain detailed location information.

In a fifth aspect, the present disclosure provides in some embodiments a communication apparatus, including a processor. The processor is configured to call a computer program in a memory, so as to implement the method in the first aspect.

In a sixth aspect, the present disclosure provides in some embodiments a communication apparatus, including a processor. The processor is configured to call a computer program in a memory, so as to implement the method in the second aspect.

In a seventh aspect, the present disclosure provides in some embodiments a processor and a memory storing therein a computer program. The processor is configured to execute the computer program stored in the memory, so as to implement the method in the first aspect.

In an eighth aspect, the present disclosure provides in some embodiments a processor and a memory storing therein a computer program. The processor is configured to execute the computer program stored in the memory, so as to implement the method in the second aspect.

In a ninth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the method in the first aspect.

In a tenth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the method in the second aspect.

In an eleventh aspect, the present disclosure provides in some embodiments a location information obtaining system, including the communication apparatus in the third aspect and the communication apparatus in the fourth aspect, or including the communication apparatus in the fifth aspect and the communication apparatus in the sixth aspect, or including the communication apparatus in the seventh aspect and the communication apparatus in the eight aspect, or including the communication apparatus in the ninth aspect and the communication apparatus in the tenth aspect

In a twelfth aspect, the present disclosure provides in some embodiments a computer-readable storage medium storing therein an instruction for a network side device. The instruction is executed to enable the network side device to implement the method in the first aspect.

In a thirteenth aspect, the present disclosure provides in some embodiments a computer-readable storage medium storing therein an instruction for a terminal device. The instruction is executed to enable the terminal device to implement the method in the second aspect.

In a fourteenth aspect, the present disclosure provides in some embodiments a computer program product including a computer program. The computer program is executed by a computer so as to implement the method in the first aspect.

In a fifteenth aspect, the present disclosure provides in some embodiments a computer program product including a computer program. The computer program is executed by a computer so as to implement the method in the second aspect.

In a sixteenth aspect, the present disclosure provides in some embodiments a chip system, including at least one processor and an interface, and used to support a network side device to achieve the functions in the first aspect, e.g., determine or process at least one of data or information involved in the above-mentioned method. In a possible design, the chip system further includes a memory storing therein necessary computer programs and data for the network side device. The chip system includes a chip, or includes a chip and other discrete elements.

In a seventeenth aspect, the present disclosure provides in some embodiments a chip system, including at least one processor and an interface, and used to support a terminal device to achieve functions involved in the second aspect, e.g., determine or process at least one of data or information involved in the above-mentioned method. In a possible design, the chip system further includes a memory storing therein a computer program and data necessary for the terminal device. The chip system includes a chip, or includes a chip and other discrete elements.

In an eighteenth aspect, the present disclosure provides in some embodiments a computer program. The computer program is executed by a computer so as to implement the method in the first aspect.

In a nineteenth aspect, the present disclosure provides in some embodiments a computer program. The computer program is executed by a computer so as to implement the method in the second aspect.

### BRIEF DESCRIPTION OF THE DRAWINGS

In order to illustrate the technical solutions of the embodiments of the present disclosure or the background in a clearer manner, the drawings desired for the embodiments of the present disclosure or the background will be described hereinafter briefly.
FIG. 1 is a schematic view showing a Non-Terrestrial Networks (NTN) communication mode according to an embodiment of the present disclosure;
FIG. 2 is another schematic view showing the NTN communication mode according to an embodiment of the present disclosure;
FIG. 3 is yet another schematic view showing the NTN communication mode according to an embodiment of the present disclosure;
FIG. 4 is a schematic view showing architecture of a communication system according to an embodiment of the present disclosure;
FIG. 5 is a flow chart of a location information obtaining method according to an embodiment of the present disclosure;
FIG. 6 is another flow chart of the location information obtaining method according to an embodiment of the present disclosure;
FIG. 7 is yet another flow chart of the location information obtaining method according to an embodiment of the present disclosure;
FIG. 8 is still yet another flow chart of the location information obtaining method according to an embodiment of the present disclosure;
FIG. 9 is still yet another flow chart of the location information obtaining method according to an embodiment of the present disclosure;
FIG. 10 is still yet another flow chart of the location information obtaining method according to an embodiment of the present disclosure;
FIG. 11 is still yet another flow chart of the location information obtaining method according to an embodiment of the present disclosure;
FIG. 12 is still yet another flow chart of the location information obtaining method according to an embodiment of the present disclosure;
FIG. 13 is still yet another flow chart of the location information obtaining method according to an embodiment of the present disclosure;
FIG. 14 is still yet another flow chart of the location information obtaining method according to an embodiment of the present disclosure;
FIG. 15 is still yet another flow chart of the location information obtaining method according to an embodiment of the present disclosure;
FIG. 16 is a block diagram of a communication apparatus according to an embodiment of the present disclosure;
FIG. 17 is another block diagram of the communication apparatus according to an embodiment of the present disclosure; and
FIG. 18 is a schematic view showing a structure of a chip according to one embodiment of the present disclosure.

### DETAILED DESCRIPTION

For ease of understanding, a part of concepts involved in embodiments of the present disclosure will be introduced briefly at first.

### 1. Minimization of Drive Tests (MDT)

As a basic concept of this technology, for an operator, measurement reporting is performed by a commercial terminal device of a subscriber to partially replace a conventional drive test, so as to automatically collect measurement data of the terminal device, thereby to detect and optimize issues and faults in a wireless network. Usually, the operator performs drive tests of a network coverage routinely each month, and performs drive tests of calling quality with respect to a specific region in response to user's complaints. The drive tests in these scenarios may be replaced with the MDT. The existing MDT includes the following measurement types.
1) Signal level measurement: a signal level of a radio signal is measured by the terminal device, and then a measurement result is reported to a network side device.
2) Quality of Service (QoS) measurement: the QoS measurement is performed by the network side device, e.g., the measurement of a traffic flow, a service throughput or a service delay, or the QoS measurement is performed by the terminal device, e.g., the measurement of an uplink processing delay, or the QoS measurement is performed jointly by the network side device and the terminal device, e.g., the measurement of an air interface delay, i.e., the measurement of a time for a data packet from a Service Data Adaptation Protocol (SDAP)/Package Data Convergence Protocol (PDCP) layer of the network side device to a SDAP/PDCP layer of the terminal device.
3) Accessibility measurement: the terminal device records information about a Radio Resource Control (RRC) connection establishment failure, and reports it to the network side device.

The MDT includes a logged MDT and an immediate MDT. The immediate MDT is mainly used to measure the terminal device in a RRC connected state (i.e., RRC_CONNECTED), and the network side device indicates the terminal device to perform real-time measurement and reporting. The measurement includes Radio Resources Management (RRM) measurement, Physical layer (PH) measurement, uplink (UL) PDCP delay measurement, Quality of Experience (QoE) measurement, Wireless Fidelity (WiFi) measurement, Bluetooth measurement, etc. The RRC measurement includes Reference Signal Received Power (RSRP) measurement, Reference Signal Received Quality (RSRQ) measurement, Received Signal Strength Indicator (RSSI) measurement, etc. The immediate MDT is usually used to measure a data volume, an Internet Protocol (IP) through, a packet transmission delay, a packet loss rate or a processing delay of the terminal device.

The logged MDT is mainly used to measure the terminal device in a RRC idle state (i.e., RRC_IDLE) or a RRC inactive state (i.e., RRC_INACTIVE). Each logged record in a logged MDT measurement result includes a relative time stamp, a New Radio (NR) Cell Global Identifier (NCG), a serving cell measurement result, a neighboring cell measurement result, a Wireless Local Area Network (WLAN) measurement result, a sensor measurement result, etc. Optionally, each logged record in the logged MDT measurement result further includes location information about the terminal device. The serving cell measurement result further includes a Physical Cell Identifier (PCI), a cell RSRP/RSRQ, an optimum beam index, a RSRP/RSRQ of an optimum beam, a quantity of good beams, etc. Usually, the logged MDT refers to the measurement of the RSRP performed by the terminal device.

Some L2 measurements have also been defined in the NR, and they are used by the network side device to count network performance for such functions as radio link management, radio resource management and network maintenance. These L2 measurements are counted with respect to one terminal device, e.g., a service throughput, a service flow, a processing delay of the terminal device, and an air interface delay of the terminal device.

The MDT measurement initiated by the network side device is a signaling-based MDT or a management-based MDT. The signaling-based MDT refers to a MDT for a specific terminal device, and the network side device receives a message sent by a Core Network (CN) for performing the MDT on a certain terminal device. The management-based MDT is not a MDT for a specific terminal device, and the network side device receives a message for performing the MDT from an Operation, Administration and Maintenance (OAM). The network side device selects, based on a certain policy, a terminal device from the UEs within a coverage of the network side device for the MDT measurement. For the signaling-based MDT, unless the terminal device has already agreed to perform the MDT, the CN does not initiate the signaling-based MDT on the terminal device. For the management-based MDT, in a case of selecting the terminal device, the network side device may consider whether or not the terminal device agrees to perform the MDT, e.g., the network side device merely selects the UEs which have already agreed to perform the MDT for the MDT measurement. For example, the CN notifies the network side device of whether or not a certain terminal device agrees to perform the MDT. For another example, the CN notifies the network side device of a Management Based MDT Allowed indication message of the terminal device. Optionally, the CN also notifies the network side device of a Public Land Mobile Network (PLMN) list for the management-based MDT. Each of the two types of MDTs includes the logged MDT and the immediate MDT. For the signaling-based MDT, the CN notifies the network side device of MDT configuration information and a Trace Collection Entity (TCE) IP address. The MDT configuration information includes an activation type of the MDT, a range of the MDT, a mode of the MDT, a configuration parameter of the mode of the MDT, a PLMN list for the signaling-based MDT, etc. The activation type of the MDT includes Immediate MDT Only, Logged MDT Only, Immediate MDT and trace, etc. The configuration parameter of the mode of the MDT includes a measurement event of the immediate MDT, a recording interval of the logged MDT, a duration of the logged MDT, etc.

With the MDT technology, (1) it is able to reduce a drive test overhead and shorten an optimization period, thereby to reduce a network optimization and maintenance cost for a mobile communication operator. (2) In addition, it is able to collect measurement information in a region where the conventional drive test cannot be performed (e.g., narrow road, forest or private place), so as to evaluate the network performance more objectively, enable a network evaluation result to be close to the user experience, and improve the users' satisfaction. (3) In addition, the conventional drive test needs to collect data in a measured region through a testing vehicle, so from the perspective of environmental protection, with the MDT, it is able to reduce the emission of carbon dioxide, and protect the environment.

### 2. Self-Organized Network (SON)

The SON does not need to be provided with any additional network device, i.e., it may make maximum use of existing devices, so as to reduce an operation cost.

The SON mainly includes Automatic Neighbor Relation (ANR), PCI selection, Mobility Robustness Optimization (MRO), Mobility Load Balancing (MLB), Energy Saving (ES), MDT, Coverage and Capacity Optimization (CCO), etc.

The existing devices may be utilized to a maximum extent, so as to achieve high performance. For example, the coverage optimization may be achieved through load balancing and CCO without any new device, and the performance may be improved using the existing devices through mobility optimization and random access optimization.

The cost may be reduced through reducing a quantity of maintainers as well as the requirement on skills of the maintainers. It is able to reduce the cost of the artificial drive test through the MDT technology, achieve an energy-saving effect through the ES technology, and improve the system performance through an automatic maintenance process.

An ultimate goal of the SON technology is to achieve the completely automatic network planning and optimization, thereby to achieve a self-organized network in a real sense.

For the SON, network configuration parameters are generated and optimized automatically.

Some use cases for the researches on the SON have been defined in the 3rd-Generation Partnership Project (3GPP), and these use cases include ANR, PCI selection, MRO, MLB, ES, MDT, coverage, CCO, etc.

Also, some use cases for the researches on the SON have been defined in the NR, and these use cases include MRO, PCI selection, MLB, ES, MDT, CCO, etc. In addition, some new functions have also be introduced, e.g., Vehicle to Everything (V2X) SON.

### 3. Radio Link Failure (RLF)

In a Long Term Evolution (LTE) of the universal mobile telecommunication technology, in a case that the terminal device discovers that an issue occurs for the communication with the network side device, it may consider that there is a RLF between the network side device and the terminal device. A detection mechanism of the RLF includes one or more of the following. (1) An issue of a physical layer is detected. For example, a RRC layer of the terminal device has received N consecutive Primary Cell (PCell) out-of-synchronization indicators from a bottom layer and does not receive M consecutive PCell synchronization indicators from the bottom layer within a subsequent time period. (2) A random access procedure performed in a Master Cell Group (MCG) fails. (3) The RRC layer of the terminal device has received indication information indicating that a maximum retransmission threshold is reached from a Radio Link Control (RLC) layer of the MCG.

### 4. MCG and Secondary Cell Group (SCG)

In a 5G wireless network, one terminal device may communicate with a plurality of network side devices, i.e., Dual Connectivity (DC) or Multi-Radio Access Technology Dual Connectivity (MR-DC). The plurality of network side devices may be network side devices belonging to a same system (e.g., they are all 4G base stations or 5G base stations), or network side devices belonging to different systems (e.g., one is a 4G base station and the other is a 5G base station). In the DC, the network side device (base station) having the interaction of a control plane signaling with the CN is called as a Master Node (MN), and the other network side device (base station) is called as Secondary Node (SN). The MN is called as a master base station, and the SN is called as a secondary base station. Cells under the master base station are called as a MCG, which includes a PCell and optionally one or more Secondary Cells (SCells). Cells under the secondary base station are called as a SCG, which includes a Primary SCG Cell (PSCell) and optionally one or more secondary SCells.

### 5. PSCell

The PSCell refers to a cell for random access in the SCG cells in a case that a synchronization reconfiguration procedure is performed by the terminal device, or a cell where an initial Physical Uplink Shared Channel (PUSCH) transmission is initiated by the terminal device in a case that a SCG change is performed and the random access procedure does not need to be performed.

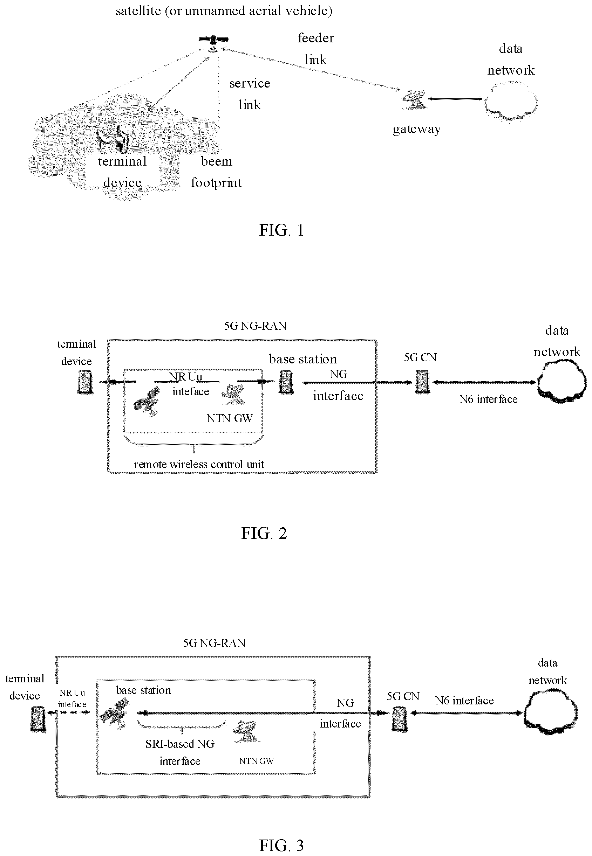

### 6. Non-Terrestrial Networks (NTN) communication mode as shown in FIG. 1

Depending on different modes for processing signals by a satellite, the NTN communication mode incudes a transparent transmission mode and a regeneration mode.

FIG. 2 shows the transparent transmission mode. A NTN ground station sends a base station signal to the satellite, and the satellite converts the signal to be at a satellite frequency band and issues the converted signal to the terminal device. Apart from frequency conversion and signal amplification, the satellite does not demodulate the base station signal.

FIG. 3 shows the regeneration mode. The NTN ground station sends the base station signal to the satellite. The satellite demodulates and decodes the signal, recodes and remodulates the signal, and then sends the regenerated signal at the satellite frequency band.

In order to understand a location information obtaining method and an apparatus in the embodiments of the present disclosure in a better manner, an available communication system will be described hereinafter at first.

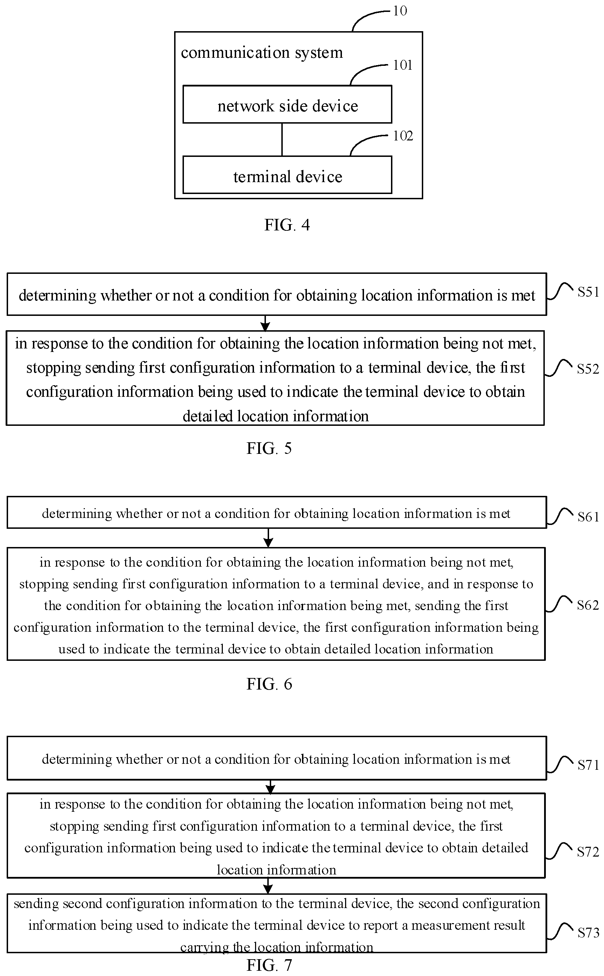

FIG. 4 is a schematic view showing architecture of a communication system according to an embodiment of the present disclosure. The communication system includes, but not limited to, one network device and one terminal device. Quantities and forms of the devices in FIG. 4 are for illustrative purposes only, but shall not be construed as limiting the embodiments of the present disclosure. In actual use, the communication system may include two or more network devices and two or more UEs. For example, as shown in FIG. 4, the communication system includes one network device 101 and one terminal device 102.

It should be appreciated that, the technical solutions in the embodiments of the present disclosure may be applied to various communication systems, e.g., a Long Term Evolution (LTE) system, a 5th-Generation (5G) mobile communication system, a 5G New Radio (NR) system, or any novel mobile communication system that may occur in the future. It should be appreciated that, Sidelink in the embodiments of the present disclosure is also called as direct communication link.

In the embodiments of the present disclosure, the network device 101 is an entity at a network side for sending or receiving a signal. For example, the network device 101 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The network device in the embodiments of the present disclosure may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the terminal device 102 is an entity at a user side for receiving or sending a signal, e.g., a mobile phone. The terminal device may also be called as terminal, user equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal, an Augmented Reality (AR) terminal, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present disclosure, a specific technology adopted by the terminal device and a specific device form thereof will not be particularly defined.

It should be appreciated that, the communication system described herein is used to describe the technical solutions provided in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

The location information obtaining method and the apparatus provided in the embodiments of the present disclosure will be described hereinafter in details in conjunction with the drawings.

FIG. 5 is a flow chart of a location information obtaining method according to an embodiment of the present disclosure.

As shown in FIG. 5, this method is executed by a network side device, and includes, but not limited to, the following steps.

S51: whether or not a condition for obtaining location information is met is determined.

In the embodiments of the present disclosure, the network side device determines whether or not the condition for obtaining the location information is met.

The condition for obtaining the location information is met in a case that the network side device does not have sufficient location data for troubleshooting network issues, or the network side device needs to obtain the location information about a terminal device in a subsequent process.

In some embodiments of the present disclosure, the condition for obtaining the location information includes at least one of: that a purpose of indicating, by the network side device, the terminal device to report the location information is MDT; that a purpose of indicating, by the network side device, the terminal device to report the location information is SON; that the network side device indicates the terminal device to report the location information and the terminal device communicates with the network side device in a mode other than NTN; or that the network side device indicates the terminal device to report the location information in a case that an event other than Event D1 is met.

The network side device indicates the terminal device to report the location information through sending indication information to the terminal device, e.g., includeCommonLocationInfo/includeLocationInfo.

In the embodiments of the present disclosure, the event other than Event D1 includes at least one of Events A1 to A6, CondEvent T1, Events B1 and B2, or Events C1 and C2 (Event A1, Event A2, Event A3, Event A4, Event A5, Event A6, Event B1, Event B2, Event C1, Event C2).

Event A1 (Serving becomes better than threshold): it indicates that serving cell signal quality is greater than a predetermined threshold.

Event A2 (Serving becomes worse than threshold): it indicates that the serving cell signal quality is smaller than a predetermined threshold.

Event A3 (Neighbour becomes offset better than serving): it indicates that intra-frequency/inter-frequency neighboring cell quality is greater than serving cell quality.

Event A4 (Neighbour becomes better than threshold): it indicates that the inter-frequency neighboring cell quality is greater than a predetermined threshold.

Event A5 (Serving becomes worse than threshold1 and neighbour becomes better than threshold2): it indicates that the serving cell quality is smaller than a predetermined threshold and the neighboring cell quality is greater than another predetermined threshold.

Event A6 (Neighbour becomes offset better than SCell): it indicates an offset of the neighboring cell quality relative to secondary cell quality.

Event B1 (Inter RAT neighbour becomes better than threshold): it indicates that the inter-RAT neighboring cell quality is greater than a predetermined threshold.

Event B2 (Serving becomes worse than threshold1 and inter RAT neighbour becomes better than threshold2): it indicates that the serving cell quality is smaller than a predetermined threshold and the inter-RAT neighboring cell quality is greater than another predetermined threshold.

Event C1 (CSI-RS resource becomes better than threshold).

Event C2 (CSI-RS resource becomes offset better than reference CSI-RS resource).

It should be appreciated that, the events listed hereinabove may be the same as those in the related art, and the meanings thereof are not limited to those mentioned hereinabove. In addition, the events other than Event D1 may also include events other than those listed hereinabove, which will not be particularly defined herein.

In the embodiments of the present disclosure, the determining whether or not the condition for obtaining the location information is met includes determining whether or not the purpose of indicating, by the network side device, the terminal device to report the location information is MDT.

In the embodiments of the present disclosure, the determining whether or not the condition for obtaining the location information is met includes determining whether or not the purpose of indicating, by the network side device, the terminal device to report the location information is SON.

In the embodiments of the present disclosure, the determining whether or not the condition for obtaining the location information is met includes determining whether or not the network side device indicates the terminal device to report the location information and the terminal device communicates with the network side device in a mode other than NTN.

In the embodiments of the present disclosure, the determining whether or not the condition for obtaining the location information is met includes determining whether or not the network side device indicates the terminal device to report the location information in a case that the event other than Event D1 is met.

It should be appreciated that, the above embodiments are not exhaustive but for illustrative purposes, i.e., they shall not be construed as limiting the present disclosure. In addition, the above embodiments may be implemented separately, or in combination.

S52: in response to the condition for obtaining the location information being not met, first configuration is stopped from being sent to the terminal device. The first configuration information is used to indicate the terminal device to obtain detailed location information.

In the embodiments of the present disclosure, in a case that the condition for obtaining the location information is not met, the network side device stops sending the first configuration information to the terminal device.

The first configuration information includes first location indication information obtainCommonLocation and/or second location indication information obtainLocation.

In the embodiments of the present disclosure, in a case that the condition for obtaining the location information includes that the purpose of indicating, by the network side device, the terminal device to report the location information is MDT, the network side device sends includeCommonLocationInfo/includeLocationInfo to the terminal device, so as to indicate the terminal device to report the location information. In a case that the purpose of indicating to report the location information is not MDT, the network side device determines that the condition for obtaining the location information is not met.

Based on the above, the first configuration information is stopped from being sent to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not MDT, the network side device stops sending the first location indication information obtainCommonLocation and/or the second location indication information obtainLocation to the terminal device. As a result, it is unnecessary for the terminal device to obtain the location information, so it is able to reduce the power consumption of the terminal device.

In the embodiments of the present disclosure, in a case that the condition for obtaining the location information includes that the purpose of indicating, by the network side device, the terminal device to report the location information is SON, the network side device sends includeCommonLocationInfo/includeLocationInfo to the terminal device, so as to indicate the terminal device to report the location information. In a case that the purpose of indicating to report the location information is not SON, the network side device determines that the condition for obtaining the location information is not met.

Based on the above, the first configuration information is stopped from being sent to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not SON, the network side device stops sending the first location indication information obtainCommonLocation and/or the second location indication information obtainLocation to the terminal device. As a result, it is unnecessary for the terminal device to obtain the location information, so it is able to reduce the power consumption of the terminal device.

In the embodiments of the present disclosure, in a case the condition for obtaining the location information includes that the network side device indicates the terminal device to report the location information and the terminal device communicates with the network side device in a mode other than NTN, the network side device sends includeCommonLocationInfo/includeLocationInfo to the terminal device, so as to indicate the terminal device to report the location information. In a case that the location information is indicated to be reported and the terminal device communicates with the network side device through NTN, the network side device determines that the condition for obtaining the location information is not met.

Based on the above, the first configuration information is stopped from being sent to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information and the terminal device communicates with the network side device through NTN, the network side device stops sending the first location indication information obtainCommonLocation and/or the second location indication information obtainLocation to the terminal device. As a result, it is unnecessary for the terminal device to obtain the location information, so it is able to reduce the power consumption of the terminal device.

In the embodiments of the present disclosure, in a case that the condition for obtaining the location information includes that the network side device indicates the terminal device to report the location information in a case that an event other than Event D1 is met, the network side device sends includeCommonLocationInfo/includeLocationInfo to the terminal device to indicate the terminal device to report the location information in a case that Event D1 is met, and determines that the condition for obtaining the location information is not met.

Based on the above, the first configuration information is stopped from being sent to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information, and the location information is reported in a case that Event D1 is met, the network side device stops sending the first location indication information obtainCommonLocation and/or the second location indication information obtainLocation to the terminal device. As a result, it is unnecessary for the terminal device to obtain the location information, so it is able to reduce the power consumption of the terminal device.

It should be appreciated that, the above embodiments are not exhaustive but for illustrative purposes, i.e., they shall not be construed as limiting the present disclosure. In addition, the above embodiments may be implemented separately, or in combination.

It should be appreciated that, in the embodiments of the present disclosure, the network side device determines whether or not the condition for obtaining the location information is met, and in a case that the condition for obtaining the location information is not met, stops sending the first configuration information to the terminal device. The first configuration information is used to indicate the terminal device to obtain the detailed position information. As a result, the terminal device does not receive the first configuration information, and it is unnecessary for the terminal device to obtain the detailed location information, so it is able to reduce the power consumption of the terminal device.

Through implementing the embodiments of the present disclosure, the network side device determines whether or not the condition for obtaining the location information is met, and in a case that the condition for obtaining the location information is not met, stops sending the first configuration information to the terminal device. The first configuration information is used to indicate the terminal device to obtain the detailed position information. As a result, the terminal device does not receive the first configuration information, and it is unnecessary for the terminal device to obtain the detailed location information, so it is able to reduce the power consumption of the terminal device.

FIG. 6 is a flow chart of another location information obtaining method according to an embodiment of the present disclosure.

As shown in FIG. 6, this method is executed by a network side device, and it includes, but not limited to, the following steps.

S61: whether or not a condition for obtaining location information is met is determined.

The relevant description about S61 may refer to that in the above-mentioned embodiments, and the same contents will not be particularly defined herein.

S62: in response to the condition for obtaining the location information being not met, first configuration information is stopped from being sent to a terminal device, and in response to the condition for obtaining the location information being met, the first configuration information is sent to the terminal device. The first configuration information is used to indicate the terminal device to obtain detailed location information.

In the embodiments of the present disclosure, in a case that the condition for obtaining the location information being not met, the network side device stops sending the first configuration information to the terminal device, and in a case that the condition for obtaining the location information being met, the network side device sends the first configuration information to the terminal device.

The first configuration information includes first location indication information obtainCommonLocation and/or second location indication information obtainLocation.

In the embodiments of the present disclosure, in a case that the condition for obtaining the location information includes that the purpose of indicating, by the network side device, the terminal device to report the location information is MDT, the network side device sends includeCommonLocationInfo/includeLocationInfo to the terminal device, so as to indicate the terminal device to report the location information. In a case that the purpose of indicating to report the location information is not MDT, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device, so as to indicate the terminal device to report the location information. In a case that the purpose of indicating to report the location information is MDT, the network side device determines that the condition for obtaining the location information is met. Based on the above, the first configuration information is sent to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not MDT, the network side device stops sending the first location indication information obtainCommonLocation and/or the second location indication information obtainLocation to the terminal device. In addition, in a case that the purpose of sending, by the network side device, includeCommonLocationInfo/includeLocationInfo to the terminal device to indicate the terminal device to report the location information is MDT, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case that the condition for obtaining the location information includes that the purpose of indicating, by the network side device, the terminal device to report the location information is SON, the network side device sends includeCommonLocationInfo/includeLocationInfo to the terminal device, so as to indicate the terminal device to report the location information. In a case that the purpose of indicating to report the location information is not SON, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device to indicate the terminal device to report the location information. In a case that the purpose of indicating to report the location information is SON, the network side device determines that the condition for obtaining the location information is met. Based on the above, the first configuration information is sent to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not SON, the network side device stops sending the first location indication information obtainCommonLocation and/or the second location indication information obtainLocation to the terminal device. In addition, in a case that the purpose of sending, by the network side device, includeCommonLocationInfo/includeLocationInfo to the terminal device to indicate the terminal device to report the location information is SON, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case the condition for obtaining the location information includes that the network side device indicates the terminal device to report the location information and the terminal device communicates with the network side device in a mode other than NTN, the network side device sends includeCommonLocationInfo/includeLocationInfo to the terminal device, so as to indicate the terminal device to report the location information. In a case that the location information is indicated to be reported and the terminal device communicates with the network side device through NTN, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device so as to indicate the terminal device to report the location information. In a case that the location information is indicated to be reported and the terminal device communicates with the network side device in a mode other than NTN, the network side device determines that the condition for obtaining the location information is met. Based on the above, the first configuration information is sent to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information and the terminal device communicates with the network side device through NTN, the network side device stops sending the first location indication information obtainCommonLocation and/or the second location indication information obtainLocation to the terminal device. In addition, in a case that the network side device sends includeCommonLocationInfo/includeLocationInfo to the terminal device to indicate the terminal device to report the location information and the terminal device communicates with the network side device in a mode other than NTN, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case that the condition for obtaining the location information includes that the network side device indicates the terminal device to report the location information in a case that an event other than Event D1 is met, the network side device sends includeCommonLocationInfo/includeLocationInfo to the terminal device to indicate the terminal device to report the location information in a case that Event D1 is met, and determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device to indicate the terminal device to report the location information in a case that the event other than Event D1 is met, and determines that the condition for obtaining the location information is met. Based on the above, the network side device sends the first configuration information to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information, and the location information is reported in a case that Event D1 is met, the network side device stops sending the first location indication information obtainCommonLocation and/or the second location indication information obtainLocation to the terminal device. In addition, in a case that the network side device sends includeCommonLocationInfo/includeLocationInfo to the terminal device to indicate the terminal device to report the location information, and the location information is reported in a case that the event other than Event D1 is met, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

It should be appreciated that, the above embodiments are not exhaustive but for illustrative purposes, i.e., they shall not be construed as limiting the present disclosure. In addition, the above embodiments may be implemented separately, or in combination.

By implementing the embodiments of the present disclosure, the network side device determines whether or not the condition for obtaining the location information is met, and in a case that the condition for obtaining the location information is not met, stops sending the first configuration information to the terminal device. The first configuration information is used to indicate the terminal device to obtain the detailed position information. In addition, in a case that the condition for obtaining the location information is met, the network side device sends the first configuration information to the terminal device. As a result, the terminal device merely needs to obtain the location information in a case that the condition for obtaining the location information is met, so it is able to reduce the power consumption of the terminal device.

FIG. 7 is a flow chart of another location information obtaining method according to an embodiment of the present disclosure.

As shown in FIG. 7, this method is executed by a network side device, and it includes, but not limited to, the following steps.

S71: whether or not a condition for obtaining location information is met is determined.

The relevant description about S71 may refer to that in the above-mentioned embodiments, and the same contents will not be particularly defined herein.

Step 72: in response to the condition for obtaining the location information being not met, first configuration information is stopped from being sent to a terminal device. The first configuration information is used to indicate the terminal device to obtain detailed location information.

The relevant description about S72 may refer to that in the above-mentioned embodiments, and the same contents will not be particularly defined herein.

S73: second configuration information is sent to the terminal device. The second configuration information is used to indicate the terminal device to report a measurement result carrying the location information.

In the embodiments of the present disclosure, the network side device sends the second configuration information to the terminal device, and the second configuration information is used to indicate the terminal device to report the measurement result carrying the location information.

The second configuration information may be a new Information Element (IE) for indicating the terminal device to report the measurement result carrying the location information, or it may reuse a measurement report configuration (ReportConfig), or reuse includeCommonLocationInfo and includeLocationInfo in the measurement report configuration. The measurement report configuration indicates the terminal device to report the measurement result carrying the location information, or includeCommonLocationInfo indicates the terminal device to report the measurement result carrying the location information, or includeLocationInfo indicates the terminal device to report the measurement result carrying the location information.

In some embodiments of the present disclosure, the network side device sends a report event to the terminal device, and the second configuration information is used to indicate the terminal device to report the measurement result carrying the location information in a case that the report event is met.

It should be appreciated that, the network side device sends the report event and the second configuration information together to the terminal device, or sends the report event and the second configuration information separately.

In a case that the network side device sends the report event and the second configuration information together to the terminal device, the network side device sends the measurement report configuration (ReportConfig) to the terminal device, and the measurement report configuration includes the second configuration information and the report event.

In some embodiments of the present disclosure, the report event includes a periodic measurement report event and/or an event-triggered report event.

It should be appreciated that, the periodic measurement report event is used to report the measurement result in a case that a periodicity requirement is met. The event-triggered report event is used to report the measurement result in a case that an event is met.

In the embodiments of the present disclosure, the report event includes at least one of Events A1 to A6, Event D1, CondEvent T1, Events B1 and B2, or Events C1 and C2 (Event A1, Event A2, Event A3, Event A4, Event A5, Event A6, Event B1, Event B2, Event C1, Event C2).

Event A1 (Serving becomes better than threshold): it indicates that serving cell signal quality is greater than a predetermined threshold.

Event A2 (Serving becomes worse than threshold): it indicates that the serving cell signal quality is smaller than a predetermined threshold.

Event A3 (Neighbour becomes offset better than serving): it indicates that intra-frequency/inter-frequency neighboring cell quality is greater than serving cell quality.

Event A4 (Neighbour becomes better than threshold): it indicates that the inter-frequency neighboring cell quality is greater than a predetermined threshold.

Event A5 (Serving becomes worse than threshold1 and neighbour becomes better than threshold2): it indicates that the serving cell quality is smaller than a predetermined threshold and the neighboring cell quality is greater than another predetermined threshold.

Event A6 (Neighbour becomes offset better than SCell): it indicates an offset of the neighboring cell quality relative to secondary cell quality.

Even D1: it indicates that the neighboring cell quality is superior over quality of a best cell in a candidate cell list and a difference between the two is greater than a first threshold.

Event B1 (Inter RAT neighbour becomes better than threshold): it indicates that inter-RAT neighboring cell quality is greater than a predetermined threshold.

Event B2 (Serving becomes worse than threshold1 and inter RAT neighbour becomes better than threshold2): it indicates that the serving cell quality is smaller than a predetermined threshold and the inter-RAT neighboring cell quality is greater than another predetermined threshold.

Event C1 (CSI-RS resource becomes better than threshold).

Event C2 (CSI-RS resource becomes offset better than reference CSI-RS resource).

In some embodiments of the present disclosure, the report event includes Event D1.

In the embodiments of the present disclosure, the network side device sends the second configuration information and the report event to the terminal device. The second configuration information is used to indicate the terminal device to report the measurement result carrying the location information in a case that the report event is met.

The report event includes Event D1, and the second configuration information is used to indicate the terminal device to report the measurement result carrying the location information in a case that Event D1 is met.

In the embodiments of the present disclosure, the network side device sends the second configuration information to the terminal device, and the second configuration information is used to indicate the terminal device to report the measurement result carrying the location information. In a case that the condition for obtaining the location information is not met, the network side device stops sending the first configuration information to the terminal device, and the first configuration information is used to indicate the terminal device to obtain the detailed location information.

The first configuration information incudes first location indication information obtainCommonLocation and/or second location indication information obtainLocation.

In a case that the condition for obtaining the location information is not met, it means that the network side device is capable of obtaining sufficient location data for troubleshooting network issues based on available location information, or the network side device does not need to obtain the location information about the terminal device in a subsequent process.

In the embodiments of the present disclosure, in a case that the second configuration information is a new IE for indicating the terminal device to report the measurement result carrying the location information, in response to sending the second configuration information to the terminal device, the network side device determines that the condition for obtaining the location information is not met, and stops sending the first configuration information to the terminal device.

It should be appreciated that, in a case that the network side device configures for the terminal device the new IE for indicating the terminal device to report the measurement result carrying the location information, the network side device may not configure the first configuration information for the terminal device.

In addition, an order of sending the first configuration information and the second configuration information to the terminal device may be adjusted based on the practical need. For example, the second configuration information may also be sent before the first configuration information.

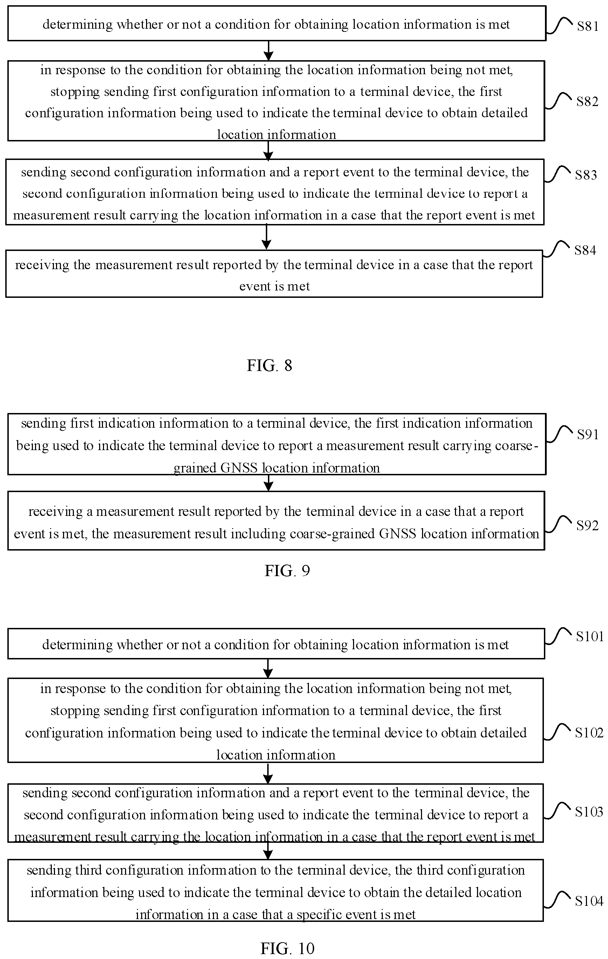

FIG. 8 is a flow chart of another location information obtaining method according to an embodiment of the present disclosure.

As shown in FIG. 8, this method is executed by a network side device, and it includes, but not limited to, the following steps.

S81: whether or not a condition for obtaining location information is met is determined.

The relevant description about S81 may refer to that in the above-mentioned embodiments, and the same contents will not be particularly defined herein.

S82: in response to a condition for obtaining location information being not met, first configuration is stopped from being sent to a terminal device. The first configuration information is used to indicate the terminal device to obtain detailed location information.

The relevant description about S82 may refer to that in the above-mentioned embodiments, and the same contents will not be particularly defined herein.

S83: second configuration information and a report event are sent to the terminal device. The second configuration information is used to indicate the terminal device to report a measurement result carrying the location information in a case that the report event is met.

S84: the measurement result reported by the terminal device in a case that the report event is met is received.

The measurement result includes at least one of: coarse-grained GNSS location information; complete GNSS location information; or indication information indicating that there is no available location.

In the embodiments of the present disclosure, the network side device sends the second configuration information and the report event to the terminal device, and the second configuration information is used to indicate the terminal device to report the measurement result carrying the location information in a case that the report event is met. In response to the condition for obtaining the location information being not met, the network side device stops sending the first configuration information to the terminal device, and the first configuration information is used to indicate the terminal device to obtain the detailed location information. In response to the condition for obtaining the location information being met, the network side device sends the first configuration information to the terminal device. The terminal device obtains the coarse-grained GNSS location information or the complete GNSS location information based on the second configuration information, the first configuration information and the report event. Then, in a case that the report event is met, the terminal device reports the measurement result, and the measurement result includes the coarse-grained GNSS location information. For example, the measurement result merely includes top X bits of the GNSS location information.

In the embodiments of the present disclosure, the network side device sends the second configuration information and the report event to the terminal device, and the second configuration information is used to indicate the terminal device to report the measurement result carrying the location information in a case that the report event is met. In response to the condition for obtaining the location information being not met, the network side device stops sending the first configuration information to the terminal device, and the first configuration information is used to indicate the terminal device to obtain the detailed location information. In response to the condition for obtaining the location information being met, the network side device sends the first configuration information to the terminal device. The terminal device obtains the coarse-grained, complete GNSS location information or the complete GNSS location information based on the second configuration information, the first configuration information and the report event. Then, in a case that the report event is met, the terminal device reports the measurement result, and the measurement result includes the complete GNSS location information.

In the embodiments of the present disclosure, the network side device sends the second configuration information and the report event to the terminal device, and the second configuration information is used to indicate the terminal device to report the measurement result carrying the location information in a case that the report event is met. In response to the condition for obtaining the location information being not met, the network side device stops sending the first configuration information to the terminal device, and the first configuration information is used to indicate the terminal device to obtain the detailed location information. In response to the condition for obtaining the location information being met, the network side device sends the first configuration information to the terminal device. The terminal device obtains the coarse-grained, complete GNSS location information or the complete GNSS location information based on the second configuration information, the first configuration information and the report event. Then, in a case that the report event is met, the terminal device reports the measurement result, and the measurement result includes the indication information indicating that there is no available location.

It should be appreciated that, the terminal device may selected to, or not to, report an available detailed location in the measurement result, e.g., based on user's willingness. In a case that a user is unwilling to report its location, the measurement result includes the indication information indicating that there is no available location.

By implementing the embodiments of the present disclosure, the network side device sends the second configuration information and the report event to the terminal device, and the second configuration information is used to indicate the terminal device to report the measurement result carrying the location information in a case that the report event is met. In response to the condition for obtaining the location information being not met, the network side device stops sending the first configuration information to the terminal device, and the first configuration information is used to indicate the terminal device to obtain the detailed location information. In response to the condition for obtaining the location information being met, the network side device sends the first configuration information to the terminal device, and receives the measurement result reported by the terminal device in a case that the report event is met. As a result, the terminal device merely needs to obtain the location information in a case that the condition for obtaining the location information is met, and report the measurement result in a case that the report event is met, so it is able to reduce the power consumption of the terminal device.

FIG. 9 is a flow chart of another location information obtaining method according to an embodiment of the present disclosure.

As shown in FIG. 9, this method is executed by a network side device, and it includes, but not limited to, the following steps.

S91: first indication information is sent to a terminal device, and the first indication information is used to indicate the terminal device to report a measurement result carrying coarse-grained GNSS location information.

In the embodiments of the present disclosure, the network side device sends the first indication information to the terminal device, so as to indicate the terminal device to report the measurement result carrying the coarse-grained GNSS location information.

S92: the measurement result reported by the terminal device in a case that a report event is met is received, and the measurement result includes the coarse-grained GNSS location information.

The report event may refer to the relevant description in the above-mentioned embodiments, and the same contents will not be particularly defined herein.

In the embodiments of the present disclosure, the terminal device reports the measurement result carrying the coarse-grained GNSS location information in a case that the report event is met. A method for obtaining the coarse-grained GNSS location information by the terminal device may refer to the relevant description about the method for obtaining the location information by the terminal device in the above embodiments, and thus will not be particularly defined herein.

It should be appreciated that, upon the receipt of the first indication information sent by the network side device and indicating the terminal device to report the measurement result carrying the coarse-grained GNSS location information, in a case that the report event is met, the terminal device reports the measurement result carrying the coarse-grained GNSS location information to the network side device. However, in a case that the terminal device does not receive the first indication information sent by the network side device and the report event is met, the terminal device reports the measurement result carrying the complete GNSS location information to the network side device.

By implementing the embodiments of the present disclosure, the network side device sends the second configuration information and the report event to the terminal device, and the second configuration information is used to indicate the terminal device to report the measurement result carrying the location information in a case that the report event is met. In response to the condition for obtaining the location information being not met, the network side device stops sending the first configuration information to the terminal device. In response to the condition for obtaining the location information being met, the network side device sends the first configuration information to the terminal device, and the first configuration information is used to indicate the terminal device to obtain the detailed location information. The network side device sends the first indication information to the terminal device, and the first indication information is used to indicate the terminal device to report the measurement result carrying the coarse-grained GNSS location information. The network side device receives the measurement result reported by the terminal device in a case that the report event is met, and the measurement result carries the coarse-grained GNSS location information. As a result, the terminal device merely needs to obtain the location information in a case that the condition for obtaining the location information is met, receive the first indication information sent by the network side device, and report the measurement result carrying the coarse-grained GNSS location information in a case that the report event is met, so it is able to reduce the power consumption of the terminal device.

FIG. 10 is a flow chart of another location information obtaining method according to an embodiment of the present disclosure.

As shown in FIG. 10, this method is executed by a network side device, and it includes, but not limited to, the following steps.

S101: whether or not a condition for obtaining location information is met is determined.

The relevant description about S101 may refer to that in the above-mentioned embodiments, and the same contents will not be particularly defined herein.

S102: in response to the condition for obtaining the location information being not met, first configuration information is stopped from being sent to the terminal device. The first configuration information is used to indicate the terminal device to obtain detailed location information.

The relevant description about S102 may refer to that in the above-mentioned embodiments, and the same contents will not be particularly defined herein.

S103: second configuration information and a report event are sent to the terminal device, and the second configuration information is used to indicate the terminal device to report a measurement result carrying the location information in a case that the report event is met.

S104: third configuration information is sent to the terminal device, and the third configuration information is used to indicate the terminal device to obtain the detailed location information in a case that a specific event is met.

The specific event includes at least one of: triggering a recording of a RLF report; reporting MCG failure information; reporting SCG failure information; triggering a recording of Random Access (RA) report; triggering a recording of a handover success report; triggering a recording of PScell addition success report; or triggering a recording of a PScell change success report.

In the related art, after the network side device has configured the first configuration information and the second configuration information for the terminal device, in the cases of the RLF report, the MCG failure information, the SCG failure information, the RA report, the handover success report, the PScell addition report or the PScell change report, the terminal device is not required to obtain the detailed location information. However, in this cases, it is also very important for the terminal device to obtain the detailed position information.

Based on the above, in the embodiments of the present disclosure, after the network side device has sent the first configuration information to the terminal device, or has sent the first configuration information and the second configuration information to the terminal device, the network side device sends third configuration information. The third configuration information is used to indicate the terminal device to obtain the detailed location information in a case that the specific event is met. However, it should be appreciated that, the third configuration information may also be sent independent of the first configuration information and/or the second configuration information, i.e., S104 may be implemented independent of S101 to S103.

In the embodiments of the present disclosure, the network side device sends the third configuration information to the terminal device, and the third configuration information is used to indicate the terminal device to obtain the detailed location information in a case that the recording of the RLF report is triggered.

In the embodiments of the present disclosure, the network side device sends the third configuration information to the terminal device, and the third configuration information is used to indicate the terminal device to obtain the detailed location information in a case that the MCG failure information is reported.

In the embodiments of the present disclosure, the network side device sends the third configuration information to the terminal device, and the third configuration information is used to indicate the terminal device to obtain the detailed location information in a case that the SCG failure information is reported.

In the embodiments of the present disclosure, the network side device sends the third configuration information to the terminal device, and the third configuration information is used to indicate the terminal device to obtain the detailed location information in a case that the recording of the RA report is triggered.

In the embodiments of the present disclosure, the network side device sends the third configuration information to the terminal device, and the third configuration information is used to indicate the terminal device to obtain the detailed location information in a case that the recording of the handover success report is triggered.

In the embodiments of the present disclosure, the network side device sends the third configuration information to the terminal device, and the third configuration information is used to indicate the terminal device to obtain the detailed location information in a case that the recording of the PScell addition success report is triggered.

In the embodiments of the present disclosure, the network side device sends the third configuration information to the terminal device, and the third configuration information is used to indicate the terminal device to obtain the detailed location information in a case that the recording of the PScell change success report is triggered.

It should be appreciated that, the above embodiments are not exhaustive but for illustrative purposes, i.e., they shall not be construed as limiting the present disclosure. In addition, the above embodiments may be implemented separately, or in combination.

In some embodiments of the present disclosure, the third configuration information includes first location indication information obtainCommonLocation or second location indication information obtainLocation.

In the embodiments of the present disclosure, the third configuration information may reuse the first location indication information obtainCommonLocation or the second location indication information obtainLocation. In some embodiments of the present disclosure, the third configuration information includes a plurality of second indication information. In a case that there is a plurality of types of specific events, each second indication information corresponds to one type of specific event; or in a case that there is a plurality of types of specific events, the plurality of types of specific events is divided into a plurality of specific event groups, and each second indication information corresponds to one specific event group.

In the embodiments of the present disclosure, the third configuration information includes a plurality of second indication information, and the plurality of second indication information is IEs independent of each other. In a case that there is a plurality of types of specific events, each second indication information corresponds to one type of specific event. In this way, the network side device configures different second indication information for the terminal device, so as to indicate the terminal device to obtain the detailed location information in a case that the specific event corresponding to the second indication information is met.

Alternatively, in a case that there is a plurality of types of specific events, the plurality of types of specific events is divided into a plurality of specific event groups, and each second indication information corresponds to one specific event group. In this way, the network side device configures different second indication information for the terminal device, so as to indicate the terminal device to obtain the detailed location information in a case that the specific event group corresponding to the second indication information is met.

For example, the third configuration information includes two second indication information, i.e., IE1 and IE2. The specific events include two of triggering the recording of the RLF report (specific event 1), reporting the MCG failure information (specific event 2), reporting the SCG failure information (specific event 3), triggering the recording of the RA report (specific event 4), triggering the recording of the handover success report (specific event 5), triggering the recording of the PScell addition success report (specific event 6) and triggering the recording of the PScell change success report (specific event 7), e.g., the specific event 4 and the specific event 5.

The IE1 corresponds to the specific event 4, and the IE2 corresponds to the specific event 5.

In this case, the network side device sends the third configuration information to the terminal device. For example, in a case that the third configuration information is the IE1, the terminal device is indicated to obtain the detailed location information in a case that the specific event 4 is met. For another example, in a case that the third configuration information is the IE2, the terminal device is indicated to obtain the detailed location information in a case that the specific event 5 is met.

For example, the third configuration information includes two second indication information, i.e., IE1 and IE2. The specific events include four of triggering the recording of the RLF report (specific event 1), reporting the MCG failure information (specific event 2), reporting the SCG failure information (specific event 3), triggering the recording of the RA report (specific event 4), triggering the recording of the handover success report (specific event 5), triggering the recording of the PScell addition success report (specific event 6) and triggering the recording of the PScell change success report (specific event 7), e.g., the specific event 1, the specific event 2, the specific event 4 and the specific event 5.

The specific event 1, the specific event 2, the specific event 4 and the specific event 5 are divided into two specific event groups, e.g., a specific event group 1 including the specific event 1, the specific event 4 and the specific event 5, and a specific event group 2 including the specific event 2. The IE1 corresponds to the specific event group 1, and the IE2 corresponds to the specific event group 2.

In this case, the network side device sends the third configuration information to the terminal device. For example, in a case that the third configuration information is the IE1, the terminal device is indicated to obtain the detailed location information in a case that the specific event group 1 including the specific event 1, the specific event 4 and the specific event 5 is met. For another example, in a case that the third configuration information is the IE2, the terminal device is indicated to obtain the detailed location information in a case that the specific event group including the specific event 2 is met.

It should be appreciated that, the above examples are for illustrative purposes only, but shall not be construed as limiting the embodiments of the present disclosure. In the embodiments of the present disclosure, the specific events including triggering the recording of the RLF report, triggering the recording of the RA report, triggering the recording of the handover success report, triggering the recording of the PScell addition success report and triggering the recording of the PScell change success report form one group, and the specific events including the MCG failure information and the SCG failure information form another group.

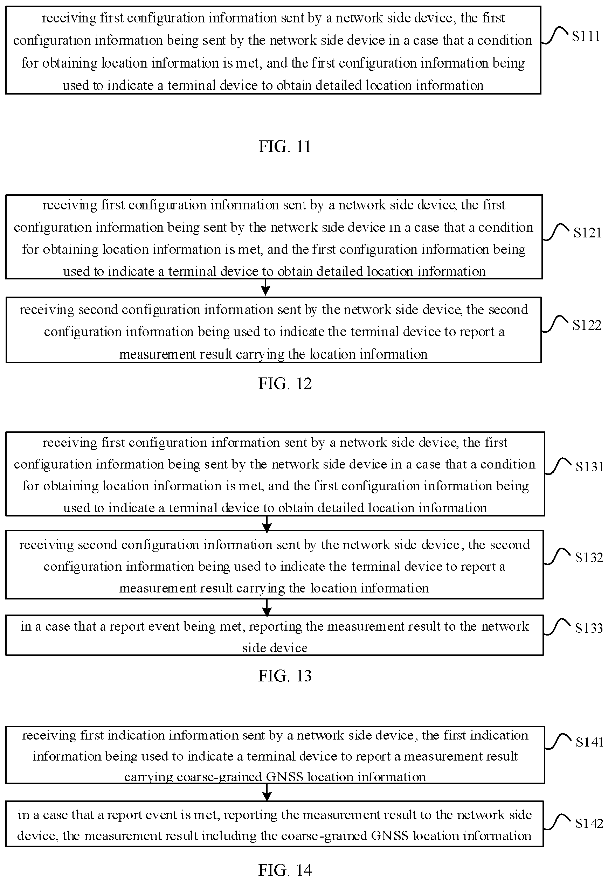

FIG. 11 is a flow chart of another location information obtaining method according to an embodiment of the present disclosure.

As shown in FIG. 11, this method is executed by a terminal device, and it includes, but not limited to, the following step.

S111: first configuration information sent by a network side device is received. The first configuration information is sent by the network side device in a case that a condition for obtaining location information is met, and the first configuration information is used to indicate the terminal device to obtain detailed location information.

In the embodiments of the present disclosure, the network side device determines whether or not the condition for obtaining the location information is met.

The condition for obtaining the location information is met in a case that the network side device does not have sufficient location data for troubleshooting network issues, or the network side device needs to obtain the location information about a terminal device in a subsequent process.

In some embodiments of the present disclosure, the condition for obtaining the location information includes at least one of: that a purpose of indicating, by the network side device, the terminal device to report the location information is MDT; that a purpose of indicating, by the network side device, the terminal device to report the location information is SON; that the network side device indicates the terminal device to report the location information and the terminal device communicates with the network side device in a mode other than NTN; or that the network side device indicates the terminal device to report the location information in a case that an event other than Event D1 is met.

The network side device indicates the terminal device to report the location information through sending indication information to the terminal device, e.g., includeCommonLocationInfo/includeLocationInfo.

In the embodiments of the present disclosure, the event other than Event D1 includes at least one of Events A1 to A6, CondEvent T1, Events B1 and B2, or Events C1 and C2 (Event A1, Event A2, Event A3, Event A4, Event A5, Event A6, Event B1, Event B2, Event C1, Event C2).

Event A1 (Serving becomes better than threshold): it indicates that serving cell signal quality is greater than a predetermined threshold.

Event A2 (Serving becomes worse than threshold): it indicates that the serving cell signal quality is smaller than a predetermined threshold.

Event A3 (Neighbour becomes offset better than serving): it indicates that intra-frequency/inter-frequency neighboring cell quality is greater than serving cell quality.

Event A4 (Neighbour becomes better than threshold): it indicates that the inter-frequency neighboring cell quality is greater than a predetermined threshold.

Event A5 (Serving becomes worse than threshold1 and neighbour becomes better than threshold2): it indicates that the serving cell quality is smaller than a predetermined threshold and the neighboring cell quality is greater than another predetermined threshold.

Event A6 (Neighbour becomes offset better than SCell): it indicates an offset of the neighboring cell quality relative to secondary cell quality.

Event B1 (Inter RAT neighbour becomes better than threshold): it indicates that inter-RAT neighboring cell quality is greater than a predetermined threshold.

Event B2 (Serving becomes worse than threshold1 and inter RAT neighbour becomes better than threshold2): it indicates that the serving cell quality is smaller than a predetermined threshold and the inter-RAT neighboring cell quality is greater than another predetermined threshold.

Event C1 (CSI-RS resource becomes better than threshold).

Event C2 (CSI-RS resource becomes offset better than reference CSI-RS resource).

It should be appreciated that, the events listed hereinabove may be the same as those in the related art, and the meanings thereof are not limited to those mentioned hereinabove. In addition, the events other than Event D1 may also include events other than those listed hereinabove, which will not be particularly defined herein.

In the embodiments of the present disclosure, the determining whether or not the condition for obtaining the location information is met includes determining whether or not the purpose of indicating, by the network side device, the terminal device to report the location information is MDT.

In the embodiments of the present disclosure, the determining whether or not the condition for obtaining the location information is met includes determining whether or not the purpose of indicating, by the network side device, the terminal device to report the location information is SON.

In the embodiments of the present disclosure, the determining whether or not the condition for obtaining the location information is met includes determining whether or not the network side device indicates the terminal device to report the location information and the terminal device communicates with the network side device in a mode other than NTN.

In the embodiments of the present disclosure, the determining whether or not the condition for obtaining the location information is met includes determining whether or not the network side device indicates the terminal device to report the location information in a case that the event other than Event D1 is met.

It should be appreciated that, the above embodiments are not exhaustive but for illustrative purposes, i.e., they shall not be construed as limiting the present disclosure. In addition, the above embodiments may be implemented separately, or in combination.

In the embodiments of the present disclosure, in a case that the condition for obtaining the location information is not met, the network side device stops sending the first configuration information to the terminal device, and in a case that the condition for obtaining the location information is met, the network side device sends the first configuration information to the terminal device.

The first configuration information includes first location indication information obtainCommonLocation and/or second location indication information obtainLocation.

In the embodiments of the present disclosure, in a case that the condition for obtaining the location information includes that the purpose of indicating, by the network side device, the terminal device to report the location information is MDT, the network side device sends includeCommonLocationInfo/includeLocationInfo to the terminal device, so as to indicate the terminal device to report the location information. In a case that the purpose of indicating to report the location information is not MDT, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device to indicate the terminal device to report the location information. In a case that the purpose of indicating to report the location information is MDT, the network side device determines that the condition for obtaining the location information is met. Based on the above, the network side device sends the first configuration information to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not MDT, the network side device stops sending the first location indication information obtainCommonLocation and/or the second location indication information obtainLocation to the terminal device. In addition, in a case that the network side device sends includeCommonLocationInfo/includeLocationInfo to the terminal device to indicate the terminal device to report the location information is MDT, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case that the condition for obtaining the location information includes that the purpose of indicating, by the network side device, the terminal device to report the location information is SON, the network side device sends includeCommonLocationInfo/includeLocationInfo to the terminal device, so as to indicate the terminal device to report the location information. In a case that the purpose of indicating to report the location information is not SON, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device so as to indicate the terminal device to report the location information. In a case that the purpose of indicating to report the location information is SON, the network side device determines that the condition for obtaining the location information is met. Based on the above, the first configuration information is sent to the terminal device, and the first configuration information is used to indicate the terminal device to obtain the detailed location information.

It should be appreciated that, in the embodiments of the present disclosure, in a case that the purpose of sending, by the network side device, includeCommonLocationInfo/includeLocationInfo to the terminal device to indicate the terminal device to report the location information is not SON, the network side device stops sending the first location indication information obtainCommonLocation and/or the second location indication information obtainLocation to the terminal device. In addition, in a case that the purpose of sending, by the network side device, includeCommonLocationInfo/includeLocationInfo to the terminal device to indicate the terminal device to report the location information is SON, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case the condition for obtaining the location information includes that the network side device indicates the terminal device to report the location information and the terminal device communicates with the network side device in a mode other than NTN, the network side device sends includeCommonLocationInfo/includeLocationInfo to the terminal device, so as to indicate the terminal device to report the location information. In a case that the location information is indicated to be reported and the terminal device communicates with the network side device through NTN, the network side device determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device, so as to indicate the terminal device to report the location information. In a case that the location information is indicated to be reported and the terminal device communicates with the network side device in a mode other than NTN, the network side device determines that the condition for obtaining the location information is met. Based on the above, the first configuration information is sent to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information and the terminal device communicates with the network side device through NTN, the network side device stops sending the first location indication information obtainCommonLocation and/or the second location indication information obtainLocation to the terminal device. In addition, the network side device sends includeCommonLocationInfo/includeLocationInfo to the terminal device to indicate the terminal device to report the location information and the terminal device communicates with the network side device in a mode other than NTN, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

In the embodiments of the present disclosure, in a case that the condition for obtaining the location information includes that the network side device indicates the terminal device to report the location information in a case that an event other than Event D1 is met, the network side device sends includeCommonLocationInfo/includeLocationInfo to the terminal device to indicate the terminal device to report the location information in a case that Event D1 is met, and determines that the condition for obtaining the location information is not met. Based on the above, the first configuration information is stopped from being sent to the terminal device, and the first configuration information is used to indicate the terminal device to obtain the detailed location information.

The network side device sends includeCommonLocationInfo/includeLocationInfo to the terminal device to indicate the terminal device to report the location information in a case that an event other than Event D1 is met, and determines that the condition for obtaining the location is met. Based on the above, the first configuration information is sent to the terminal device, and the first configuration information is used to indicate the terminal device to obtain the detailed location information.

It should be appreciated that, in the embodiments of the present disclosure, in a case that the network side device sends includeCommonLocationInfo/includeLocationInfo to the terminal device to indicate the terminal device to report the location information, and the location information is reported in a case that Event D1 is met, the network side device stops sending the first location indication information obtainCommonLocation and/or the second location indication information obtainLocation to the terminal device. In addition, in a case that the network side device sends includeCommonLocationInfo/includeLocationInfo to the terminal device to indicate the terminal device to report the location information, and the location information is reported in a case that an event other than Event D1 is met, the network side device sends the first location indication information obtainCommonLocation and/or the second location indication information obtainLocation to the terminal device. As a result, the terminal device merely needs to obtain the location information in a case that the condition for obtaining the location information is met, so it is able to reduce the power consumption of the terminal device.

It should be appreciated that, the above embodiments are not exhaustive but for illustrative purposes, i.e., they shall not be construed as limiting the present disclosure. In addition, the above embodiments may be implemented separately, or in combination.

Through implementing the embodiments of the present disclosure, the first configuration information sent by the network side device is received, and the first configuration information is sent by the network side device in a case that the condition for obtaining location information is met, and the first configuration information is used to indicate the terminal device to obtain detailed location information. As a result, the terminal device merely needs to obtain the location information in a case that the condition for obtaining the location information is met, so it is able to reduce the power consumption of the terminal device.

FIG. 12 is a flow chart of another location information obtaining method according to an embodiment of the present disclosure.

As shown in FIG. 12, this method is executed by the terminal device, and it includes, but not limited to, the following steps.

S121: first configuration information sent by a network side device is received. The first configuration information is sent by the network side device in a case that a condition for obtaining location information is met, and the first configuration information is used to indicate the terminal device to obtain detailed location information.

S122: second configuration information sent by the network side device is received, and the second configuration information is used to indicate the terminal device to report a measurement result carrying the location information.

In the embodiments of the present disclosure, the terminal device receives the second configuration information sent by the network side device, and the second configuration information is used to indicate the terminal device to report the measurement result carrying the location information.

The second configuration information may be a new IE for indicating the terminal device to report the measurement result carrying the location information, or it may reuse a measurement report configuration (ReportConfig), or reuse includeCommonLocationInfo and includeLocationInfo in the measurement report configuration. The measurement report configuration indicates the terminal device to report the measurement result carrying the location information, or includeCommonLocationInfo indicates the terminal device to report the measurement result carrying the location information, or includeLocationInfo indicates the terminal device to report the measurement result carrying the location information.

In some embodiments of the present disclosure, the terminal device receives a report event sent by the network side device, and the second configuration information is used to indicate the terminal device to report the measurement result carrying the location information in a case that the report event is met.

It should be appreciated that, the network side device sends the report event and the second configuration information together to the terminal device, or sends the report event and the second configuration information separately.

In a case that the network side device sends the report event and the second configuration information together to the terminal device, the network side device sends the measurement report configuration (ReportConfig) to the terminal device, and the measurement report configuration includes the second configuration information and the report event.

In some embodiments of the present disclosure, the report event includes a periodic measurement report event and/or an event-triggered report event.

It should be appreciated that, the periodic measurement report event is used to report the measurement result in a case that a periodicity requirement is met. The event-triggered report event is used to report the measurement result in a case that an event is met.

In the embodiments of the present disclosure, the report event includes at least one of Events A1 to A6, Event D1, CondEvent T1, Events B1 and B2, or Events C1 and C2 (Event A1, Event A2, Event A3, Event A4, Event A5, Event A6, Event B1, Event B2, Event C1, Event C2).

Event A1 (Serving becomes better than threshold): it indicates that serving cell signal quality is greater than a predetermined threshold.

Event A2 (Serving becomes worse than threshold): it indicates that the serving cell signal quality is smaller than a predetermined threshold.

Event A3 (Neighbour becomes offset better than serving): it indicates that intra-frequency/inter-frequency neighboring cell quality is greater than serving cell quality.

Event A4 (Neighbour becomes better than threshold): it indicates that the inter-frequency neighboring cell quality is greater than a predetermined threshold.

Event A5 (Serving becomes worse than threshold1 and neighbour becomes better than threshold2): it indicates that the serving cell quality is smaller than a predetermined threshold and the neighboring cell quality is greater than another predetermined threshold.

EventA6 (Neighbour becomes offset better than SCell): it indicates an offset of the neighboring cell quality relative to secondary cell quality.

Even D1: it indicates that the neighboring cell quality is superior over quality of a best cell in a candidate cell list and a difference between the two is greater than a first threshold.

Event B1 (Inter RAT neighbour becomes better than threshold): it indicates that inter-RAT neighboring cell quality is greater than a predetermined threshold.

Event B2 (Serving becomes worse than threshold1 and inter RAT neighbour becomes better than threshold2): it indicates that the serving cell quality is smaller than a predetermined threshold and the inter-RAT neighboring cell quality is greater than another predetermined threshold.

Event C1 (CSI-RS resource becomes better than threshold).

Event C2 (CSI-RS resource becomes offset better than reference CSI-RS resource).

In some embodiments of the present disclosure, the report event includes Event D1.

In the embodiments of the present disclosure, the network side device sends the second configuration information and the report event to the terminal device. The second configuration information is used to indicate the terminal device to report the measurement result carrying the location information in a case that the report event is met.

The report event includes Event D1, and the second configuration information is used to indicate the terminal device to report the measurement result carrying the location information in a case that Event D1 is met.

By implementing the embodiments of the present disclosure, the first configuration information sent by the network side device, and the first configuration information is used to indicate the terminal device to report the measurement result carrying the location information. The second configuration information sent by the network side device is received, and the second configuration information is sent by the network side device in a case that the condition for obtaining the location information is met, and the second configuration information is used to indicate the terminal device to obtain the detailed location information. As a result, the terminal device merely needs to obtain the location information in a case that the condition for obtaining the location information is met, so it is able to reduce the power consumption of the terminal device.

FIG. 13 is a flow chart of another location information obtaining method according to an embodiment of the present disclosure.

As shown in FIG. 13, this method is executed by a terminal device, and it includes, but not limited to, the following steps.

S131: first configuration information sent by a network side device is received. The first configuration information is sent by the network side device in a case that a condition for obtaining location information is met, and the first configuration information is used to indicate the terminal device to obtain detailed location information.

S132: second configuration information sent by the network side device is received. The second configuration information is used to indicate the terminal device to report a measurement result carrying the location information.

S133: the measurement result is reported to the network side device in a case that a report event is met.

The measurement result includes at least one of: coarse-grained GNSS location information; complete GNSS location information; or indication information indicating that there is no available location.

In the embodiments of the present disclosure, the terminal device receives the second configuration information and the report event sent by the network side device, and the second configuration information is used to indicate the terminal device to report the measurement result carrying the location information in a case that the report event is met. The terminal device receives the first configuration information sent by the network side device in a case that the condition for obtaining the location information is met, and the first configuration information is used to indicate the terminal device to obtain the detailed location information. The terminal device obtains the coarse-grained GNSS location information or the complete GNSS location information based on the second configuration information, the first configuration information and the report event. Then, in a case that the report event is met, the terminal device reports the measurement result, and the measurement result includes the coarse-grained GNSS location information. For example, the measurement result merely includes top X bits of the GNSS location information.

In the embodiments of the present disclosure, the terminal device receives the second configuration information and the report event sent by the network side device, and the second configuration information is used to indicate the terminal device to report the measurement result carrying the location information in a case that the report event is met. The terminal device receives the first configuration information sent by the network side device in a case that the condition for obtaining the location information is met, and the first configuration information is used to indicate the terminal device to obtain the detailed location information. The terminal device obtains the coarse-grained, complete GNSS location information or the complete GNSS location information based on the second configuration information, the first configuration information and the report event. Then, in a case that the report event is met, the terminal device reports the measurement result, and the measurement result includes the complete GNSS location information.

In the embodiments of the present disclosure, the terminal device receives the second configuration information and the report event sent by the network side device, and the second configuration information is used to indicate the terminal device to report the measurement result carrying the location information in a case that the report event is met. The terminal device receives the first configuration information sent by the network side device in a case that the condition for obtaining the location information is met, and the first configuration information is used to indicate the terminal device to obtain the detailed location information. The terminal device obtains the coarse-grained, complete GNSS location information or the complete GNSS location information based on the second configuration information, the first configuration information and the report event. Then, in a case that the report event is met, the terminal device reports the measurement result, and the measurement result includes the indication information indicating that there is no available location.

It should be appreciated that, the terminal device may selected to, or not to, report an available detailed location in the measurement result, e.g., based on user's willingness. In a case that a user is unwilling to report its location, the measurement result includes the indication information indicating that there is no available location.

In the embodiments of the present disclosure, the terminal device receives the second configuration information and the report event sent by the network side device, and the second configuration information is used to indicate the terminal device to report the measurement result carrying the location information in a case that the report event is met. The terminal device receives the first configuration information sent by the network side device in a case that the condition for obtaining the location information is met, and the first configuration information is used to indicate the terminal device to obtain the detailed location information. Then, in a case that the report event is met, the terminal device reports the measurement result to the network side device. As a result, the terminal device merely needs to obtain the location information in a case that the condition for obtaining the location information is met, and reports the measurement result in a case that the report event is met, so it is able to reduce the power consumption of the terminal device.

FIG. 14 is a flow chart of another location information obtaining method according to an embodiment of the present disclosure.

As shown in FIG. 14, this method is executed by a terminal device, and it includes, but not limited to, the following steps.

S141: first indication information sent by a network side device is received. The first indication information is used to indicate the terminal device to report a measurement result carrying coarse-grained GNSS location information.

In the embodiments of the present disclosure, the network side device sends the first indication information to the terminal device, so as to indicate the terminal device to report the measurement result carrying the coarse-grained GNSS location information.

S142: in a case that a report event is met, the measurement result is reported to the network side device. The measurement result includes the coarse-grained GNSS location information.

The report event may refer to the relevant description in the above-mentioned embodiments, and the same contents will not be particularly defined herein.

In the embodiments of the present disclosure, the terminal device reports the measurement result carrying the coarse-grained GNSS location information in a case that the report event is met. A method for obtaining the coarse-grained GNSS location information by the terminal device may refer to the relevant description about the method for obtaining the location information by the terminal device in the above embodiments, and thus will not be particularly defined herein.

It should be appreciated that, upon the receipt of the first indication information sent by the network side device and indicating the terminal device to report the measurement result carrying the coarse-grained GNSS location information, in a case that the report event is met, the terminal device reports the measurement result carrying the coarse-grained GNSS location information to the network side device. However, in a case that the terminal device does not receive the first indication information sent by the network side device and the report event is met, the terminal device reports the measurement result carrying the complete GNSS location information to the network side device.

By implementing the embodiments of the present disclosure, the terminal device receives the second configuration information and the report event sent by the network side device, and the second configuration information is used to indicate the terminal device to report the measurement result carrying the location information in a case that the report event is met. The terminal device receives the first configuration information sent by the network side device in a case that the condition for obtaining the location information is met, and the first configuration information is used to indicate the terminal device to obtain the detailed location information. The terminal device receives the first indication information sent by the network side device, and the first indication information is used to indicate the terminal device to report the measurement result carrying the coarse-grained GNSS location information. In a case that the report event is met, the terminal device reports the measurement result to the network side device, and the measurement result includes the coarse-grained GNSS location information. As a result, the terminal device merely needs to obtain the location information in a case that the condition for obtaining the location information is met, receive the first indication information sent by the network side device, and report the measurement result carrying the coarse-grained GNSS location information in a case that the report event is met, so it is able to reduce the power consumption of the terminal device.

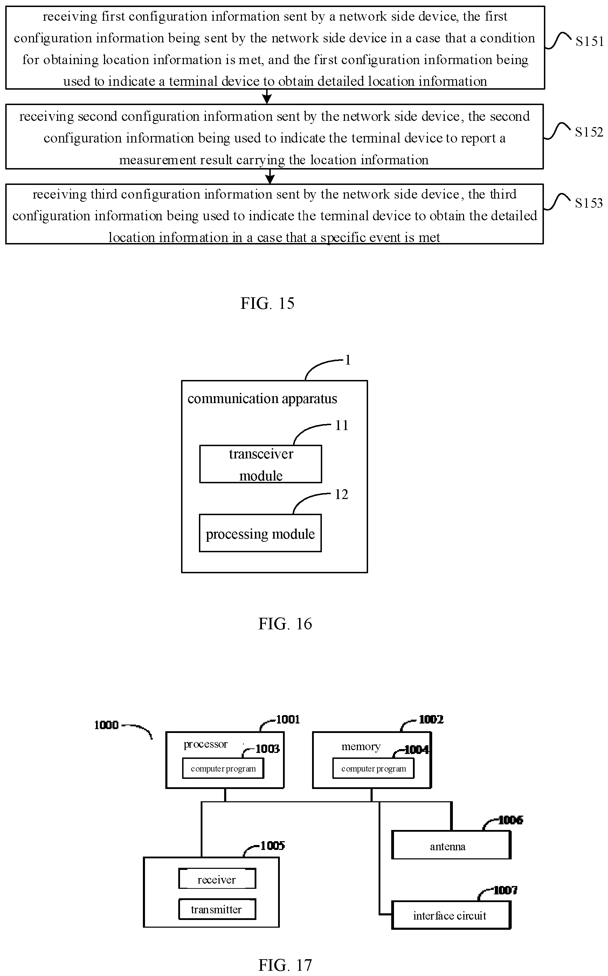

FIG. 15 is a flow chart of another location information obtaining method according to an embodiment of the present disclosure.

As shown in FIG. 15, this method is executed by a terminal device, and it includes, but not limited to, the following steps.

S151: first configuration information sent by a network side device is received. The first configuration information is sent by the network side device in a case that a condition for obtaining location information is met, and the first configuration information is used to indicate the terminal device to obtain detailed location information.

S152: second configuration information sent by the network side device is received, and the second configuration information is used to indicate the terminal device to report a measurement result carrying the location information.

S153: third configuration information sent by the network side device is received, and the third configuration information is used to indicate the terminal device to obtain the detailed location information in a case that a specific event is met.

The specific event includes at least one of: triggering a recording of a RLF report; reporting MCG failure information; reporting SCG failure information; triggering a recording of RA report; triggering a recording of a handover success report; triggering a recording of PScell addition success report; or triggering a recording of a PScell change success report.

In the related art, after the terminal device has received the first configuration information and the second configuration information sent by the network side device, in the cases of the RLF report, the MCG failure information, the SCG failure information, the RA report, the handover success report, the PScell addition report or the PScell change report, the network side device does not require the terminal device to obtain the detailed location information. However, in this cases, it is also very important for the terminal device to obtain the detailed position information.

Based on the above, in the embodiments of the present disclosure, after the network side device has sent the first configuration information to the terminal device, or has sent the first configuration information and the second configuration information to the terminal device, the network side device sends third configuration information. The third configuration information is used to indicate the terminal device to obtain the detailed location information in a case that the specific event is met. However, it should be appreciated that, the third configuration information may also be sent independent of the first configuration information and/or the second configuration information, i.e., S153 may be implemented independent of S151 and S152.

In the embodiments of the present disclosure, the terminal device receives the third configuration information sent by the network side device, and the third configuration information is used to indicate the terminal device to obtain the detailed location information in a case that the recording of the RLF report is triggered.

In the embodiments of the present disclosure, the terminal device receives the third configuration information sent by the network side device, and the third configuration information is used to indicate the terminal device to obtain the detailed location information in a case that the MCG failure information is reported.

In the embodiments of the present disclosure, the terminal device receives the third configuration information sent by the network side device, and the third configuration information is used to indicate the terminal device to obtain the detailed location information in a case that the SCG failure information is reported.

In the embodiments of the present disclosure, the terminal device receives the third configuration information sent by the network side device, and the third configuration information is used to indicate the terminal device to obtain the detailed location information in a case that the recording of the RA report is triggered.

In the embodiments of the present disclosure, the terminal device receives the third configuration information sent by the network side device, and the third configuration information is used to indicate the terminal device to obtain the detailed location information in a case that the recording of the handover success report is triggered.

In the embodiments of the present disclosure, the terminal device receives the third configuration information sent by the network side device, and the third configuration information is used to indicate the terminal device to obtain the detailed location information in a case that the recording of the PScell addition success report is triggered.

In the embodiments of the present disclosure, the terminal device receives the third configuration information sent by the network side device, and the third configuration information is used to indicate the terminal device to obtain the detailed location information in a case that the recording of the PScell change success report is triggered.

It should be appreciated that, the above embodiments are not exhaustive but for illustrative purposes, i.e., they shall not be construed as limiting the present disclosure. In addition, the above embodiments may be implemented separately, or in combination.

In some embodiments of the present disclosure, the third configuration information includes first location indication information obtainCommonLocation or second location indication information obtainLocation.

In the embodiments of the present disclosure, the third configuration information may reuse the first location indication information obtainCommonLocation or the second location indication information obtainLocation.

In some embodiments of the present disclosure, the third configuration information includes a plurality of second indication information. In a case that there is a plurality of types of specific events, each second indication information corresponds to one type of specific event; or in a case that there is a plurality of types of specific events, the plurality of types of specific events is divided into a plurality of specific event groups, and each second indication information corresponds to one specific event group.

In the embodiments of the present disclosure, the third configuration information includes a plurality of second indication information, and the plurality of second indication information is IEs independent of each other. In a case that there is a plurality of types of specific events, each second indication information corresponds to one type of specific event. In this way, the network side device configures different second indication information for the terminal device, so as to indicate the terminal device to obtain the detailed location information in a case that the specific event corresponding to the second indication information is met.

Alternatively, in a case that there is a plurality of types of specific events, the plurality of types of specific events is divided into a plurality of specific event groups, and each second indication information corresponds to one specific event group. In this way, the network side device configures different second indication information for the terminal device, so as to indicate the terminal device to obtain the detailed location information in a case that the specific event group corresponding to the second indication information is met.

For example, the third configuration information includes two second indication information, i.e., IE1 and IE2. The specific events include two of triggering the recording of the RLF report (specific event 1), reporting the MCG failure information (specific event 2), reporting the SCG failure information (specific event 3), triggering the recording of the RA report (specific event 4), triggering the recording of the handover success report (specific event 5), triggering the recording of the PScell addition success report (specific event 6) and triggering the recording of the PScell change success report (specific event 7), e.g., the specific event 4 and the specific event 5.

The IE1 corresponds to the specific event 4, and the IE2 corresponds to the specific event 5.

In this case, the network side device sends the third configuration information to the terminal device. For example, in a case that the third configuration information is the IE1, the terminal device is indicated to obtain the detailed location information in a case that the specific event 4 is met. For another example, in a case that the third configuration information is the IE2, the terminal device is indicated to obtain the detailed location information in a case that the specific event 5 is met.

For example, the third configuration information includes two second indication information, i.e., IE1 and IE2. The specific events include four of triggering the recording of the RLF report (specific event 1), reporting the MCG failure information (specific event 2), reporting the SCG failure information (specific event 3), triggering the recording of the RA report (specific event 4), triggering the recording of the handover success report (specific event 5), triggering the recording of the PScell addition success report (specific event 6) and triggering the recording of the PScell change success report (specific event 7), e.g., the specific event 1, the specific event 2, the specific event 4 and the specific event 5.

The specific event 1, the specific event 2, the specific event 4 and the specific event 5 are divided into two specific event groups, e.g., a specific event group 1 including the specific event 1, the specific event 4 and the specific event 5, and a specific event group 2 including the specific event 2. The IE1 corresponds to the specific event group 1, and the IE2 corresponds to the specific event group 2.

In this case, the network side device sends the third configuration information to the terminal device. For example, in a case that the third configuration information is the IE1, the terminal device is indicated to obtain the detailed location information in a case that the specific event group 1 including the specific event 1, the specific event 4 and the specific event 5 is met. For another example, in a case that the third configuration information is the IE2, the terminal device is indicated to obtain the detailed location information in a case that the specific event group including the specific event 2 is met.

It should be appreciated that, the above examples are for illustrative purposes only, but shall not be construed as limiting the embodiments of the present disclosure.

In the above-mentioned embodiments of the present disclosure, the methods have been described from the perspectives of the network side device and the terminal device. In order to achieve various functions in the embodiments of the present disclosure, each of the network side device and the terminal device includes a hardware structure and a software module, i.e., the functions are achieved in the form of the hardware structure, the software module, or the combination thereof. A certain function in these functions is executed through the hardware structure, the software module, or the combination thereof.

FIG. 16 is a schematic view showing a communication apparatus 1 according to an embodiment of the present disclosure. The communication apparatus 1 in FIG. 16 includes a transceiver module 11 and a processing module 12. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus 1 may be a terminal device, or an apparatus in the terminal device, an apparatus capable of being used in combination with the terminal device. Alternatively, the communication apparatus 1 may be a network side device, an apparatus in the network side device, or an apparatus capable of being used in combination with the network side device.

In a case that the communication apparatus 1 is a network side device, it includes a transceiver module 11 and a processing module 12.

The processing module 12 is configured to determine whether or not a condition for obtaining location information is met.

The transceiver module 11 is configured to, in response to the condition for obtaining the location information being not met, stop sending the first configuration information to the terminal device. The first configuration information is used to indicate the terminal device to obtain detailed location information.

In some embodiments of the present disclosure, the transceiver module 11 is further configured to, in response to the condition for obtaining the location information being met, send the first configuration information to the terminal device.

In some embodiments of the present disclosure, the condition for obtaining the location information includes at least one of: that a purpose of indicating, by the network side device, the terminal device to report the location information is MDT; that a purpose of indicating, by the network side device, the terminal device to report the location information is SON; that the network side device indicates the terminal device to report the location information and the terminal device communicates with the network side device in a mode other than NTN; or that the network side device indicates the terminal device to report the location information in a case that an event other than Event D1 is met.

In some embodiments of the present disclosure, the transceiver module 11 is further configured to send second configuration information to the terminal device, and the second configuration information is used to indicate the terminal device to report a measurement result carrying the location information.

In some embodiments of the present disclosure, the transceiver module 11 is further configured to send a report event to the terminal device, and the second configuration information is used to indicate the terminal device to report the measurement result carrying the location information in a case that the report event is met.

In some embodiments of the present disclosure, the report event includes a periodic measurement report event and/or an event-triggered report event.

In some embodiments of the present disclosure, the report event includes Event D1.

In some embodiments of the present disclosure, the transceiver module 11 is further configured to receive the measurement result reported by the terminal device in a case that the report event is met. The measurement result includes at least one of: coarse-grained GNSS location information; complete GNSS location information; or indication information indicating that there is no available location.

In some embodiments of the present disclosure, the transceiver module 11 is further configured to send first indication information to the terminal device, and the first indication information is used to indicate the terminal device to report the measurement result carrying the coarse-grained GNSS location information.

In some embodiments of the present disclosure, the first configuration information is first location indication information obtainCommonLocation or second location indication information obtainLocation.

In some embodiments of the present disclosure, the transceiver module 11 is further configured to send third configuration information to the terminal device. The third configuration information is used to indicate the terminal device to obtain detailed location information in a case that a specific event is met. The specific event includes at least one of: triggering a recording of a RLF report; reporting MCG failure information; reporting SCG failure information; triggering a recording of RA report; triggering a recording of a handover success report; triggering a recording of PScell addition success report; or triggering a recording of a PScell change success report.

In some embodiments of the present disclosure, the third configuration information includes a plurality of second indication information. In a case that there is a plurality of types of specific events, each second indication information corresponds to one type of specific event; or in a case that there is a plurality of types of specific events, the plurality of types of specific events is divided into a plurality of specific event groups, and each second indication information corresponds to one specific event group.

In some embodiments of the present disclosure, the third configuration information is first location indication information obtainCommonLocation or second location indication information obtainLocation.

In a case that the communication apparatus 1 is a terminal device, it includes a transceiver module 11.

The transceiver module 11 is configured to receive first configuration information sent by a network side device. The first configuration information is sent by the network side device in a case that a condition for obtaining location information is met, and the first configuration information is used to indicate the terminal device to obtain detailed location information.

In some embodiments of the present disclosure, the condition for obtaining the location information includes at least one of: that a purpose of indicating, by the network side device, the terminal device to report the location information is MDT; that a purpose of indicating, by the network side device, the terminal device to report the location information is SON; that the network side device indicates the terminal device to report the location information and the terminal device communicates with the network side device in a mode other than NTN; or that the network side device indicates the terminal device to report the location information in a case that an event other than Event D1 is met.

In some embodiments of the present disclosure, the transceiver module 11 is configured to receive second configuration information sent by the network side device, and the second configuration information is used to indicate the terminal device to report a measurement result carrying the location information.

In some embodiments of the present disclosure, the transceiver module 11 is further configured to receive a report event sent by the network side device, and the second configuration information is used to indicate the terminal device to report the measurement result carrying the location information in a case that the report event is met.

In some embodiments of the present disclosure, the report event includes a periodic measurement report event and/or an event-triggered report event.

In some embodiments of the present disclosure, the report event includes Event D1.

In some embodiments of the present disclosure, the transceiver module 11 is further configured to report the measurement result to the network side device in a case that the report event is met. The measurement result includes at least one of: coarse-grained GNSS location information; complete GNSS location information; or indication information indicating that there is no available location.

In some embodiments of the present disclosure, the transceiver module 11 is further configured to receive first indication information sent by the network side device, and the first indication information is used to indicate the terminal device to report the measurement result carrying the coarse-grained GNSS location information.

In some embodiments of the present disclosure, the first configuration information is first location indication information obtainCommonLocation or second location indication information obtainLocation.

In some embodiments of the present disclosure, the transceiver module 11 is further configured to receive third configuration information sent by the network side device, and the third configuration information is used to indicate the terminal device to obtain the detailed location information in a case that a specific event is met. The specific event includes at least one of: triggering a recording of a RLF report; reporting MCG failure information; reporting SCG failure information; triggering a recording of RA report; triggering a recording of a handover success report; triggering a recording of PScell addition success report; or triggering a recording of a PScell change success report.

In some embodiments of the present disclosure, the third configuration information includes a plurality of second indication information. In a case that there is a plurality of types of specific events, each second indication information corresponds to one type of specific event; or in a case that there is a plurality of types of specific events, the plurality of types of specific events is divided into a plurality of specific event groups, and each second indication information corresponds to one specific event group.

In some embodiments of the present disclosure, the third configuration information is first location indication information obtainCommonLocation or second location indication information obtainLocation.

With respect to the communication apparatus 1 in the embodiments of the present disclosure, a specific mode of performing the operations by each module has already been described in details in the above-mentioned method embodiments, which will not be particularly defined herein. The communication apparatus 1 provided in the embodiments of the present disclosure has a same or similar beneficial effect as the location information obtaining method mentioned herein above, which will not be particularly defined.

FIG. 17 is a schematic view showing another communication apparatus 1000 according to an embodiment of the present disclosure. The communication apparatus 1000 may be a network side device, a terminal device, or a chip, a chip system or a processor which supports the network side device to achieve the above-mentioned method, or a chip, a chip system or a processor which supports the terminal device to achieve the above-mentioned method. The communication apparatus 1000 is used to achieve the above-mentioned method, which will not be particularly defined herein.

The communication apparatus 1000 may include one or more processors 1001. The processor 1001 may be a general-purpose processor or special-purpose processor, e.g., a baseband processor or a central processing unit. The baseband processor is configured to process a communication protocol as well as communication data, and the central processing unit is configured to control the communication apparatus (e.g., a network side device, a baseband chip, a terminal device, a terminal device chip, a Distributed Unit (DU) or a Centralized Unit (CU)), execute a computer program, and process data in the computer program.

Optionally, the communication apparatus 1000 further includes one or more memories 1002 storing therein a computer program 1004. The computer program 1004 is executed by the processor, so that the communication apparatus 1000 executes the above-mentioned method. Optionally, the memory 1002 further stores therein data. The communication apparatus 1000 is arranged independent of, or integrated with, the memory 1002.

Optionally, the communication apparatus 1000 further includes a transceiver 1005 and an antenna 1006. The transceiver 1005 is also called as a transceiver unit, a transceiver machine or a transceiver circuit, and it is configured to achieve a transmission function and a reception function. The transceiver 1005 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 1000 further includes one or more interface circuits 1007. The interface circuit 1007 is configured to receive a code instruction and transmit it to the processor 1001. The processor 1001 executes the code instruction, so that the communication apparatus 1000 implements the above-mentioned method.

In a case that the communication apparatus 1000 is a network side device, the processor 1001 is configured to execute S51 in FIG. 5, S61 in FIG. 6, S71 in FIG. 7, S81 in FIG. 8, and S101 in FIG. 10, and the transceiver 1005 is configured to execute S52 in FIG. 5, S62 in FIG. 6, S72 and S73 in FIG. 7, S82, S83 and S84 in FIG. 8, S91 and S92 in FIG. 9, and S101, S102 and S102 in FIG. 10.

In a case that the communication apparatus 1000 is a terminal device, the transceiver 1005 is configured to execute S111 in FIG. 11, S121 and S122 in FIG. 12, S131, S132 and S133 in FIG. 13, S141 and S142 in FIG. 14, and S151, S152 and S153 in FIG. 15.

In a possible embodiment of the present disclosure, the processor 1000 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In a possible embodiment of the present disclosure, the processor 1001 stores therein a computer program 1003, and the computer program 1003 is executed by the processor 1001, so that the communication apparatus 1000 implements the above-mentioned method. The computer program 1003 may be programmed in the processor 1001, and in this case, the processor 1001 may be implemented through hardware.

In a possible embodiment of the present disclosure, the communication apparatus 1000 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a terminal device, but the scope of the communication apparatus is not limited thereto. In addition, a structure of the communication apparatus is limited to that in FIG. 17. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

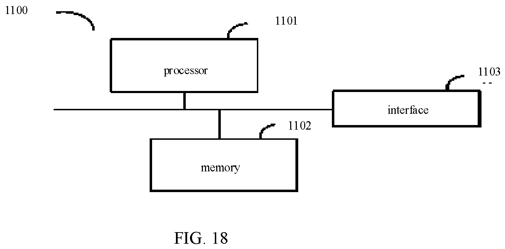

In a case that the communication apparatus is a chip or a chip system, FIG. 18 is a schematic view of the chip according to an embodiments of the present disclosure.

The chip 1100 includes a processor 1101 and an interface 1103. There may exist one or more processors 1101, and more than one interface 1103.

In a case that the chip is used to achieve the function of the network side device in the embodiments of the present disclosure, the interface 1103 is configured to receive a code instruction and transmit the code instruction to the processor. The processor 1101 is configured to execute the code instruction so as to implement the location information obtaining method in some embodiments mentioned hereinabove.

In a case that the chip is used to achieve the function of the terminal device in the embodiments of the present disclosure, the interface 1103 is configured to receive a code instruction and transmit the code instruction to the processor. The processor 1101 is configured to execute the code instruction so as to implement the location information obtaining method in some embodiments mentioned hereinabove.

Optionally, the chip 1100 further includes a memory 1102 for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a resource configuration system, which includes the communication apparatus serving as a terminal device in FIG. 16 and the communication apparatus serving as a network side device, or includes the communication apparatus serving as a terminal device in FIG. 17 and the communication apparatus serving as a network side device.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a coaxial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "prenegotiated", "preconfigured", "programmed" or "pre-programed".

It should be appreciated that, units and algorithm steps for instances described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A location information obtaining method, executed by a network side device, comprising:
determining whether or not a condition for obtaining location information is met; and
stopping sending first configuration information to a terminal device in response to the condition for obtaining the location information being not met, wherein the first configuration information is configured to indicate the terminal device to obtain detailed location information.

2. The location information obtaining method of claim 1, further comprising:
sending the first configuration information to the terminal device in response to the condition for obtaining the location information being met.

3. The location information obtaining method of claim 1 or 2, wherein the condition for obtaining the location information comprises at least one of:
that a purpose of indicating, by the network side device, the terminal device to report the location information is Minimization of Drive Tests (MDT);
that a purpose of indicating, by the network side device, the terminal device to report the location information is Self-Organized Network (SON);
that the network side device indicates the terminal device to report the location information and the terminal device communicates with the network side device in a mode other than Non-Terrestrial Networks (NTN); or
that the network side device indicates the terminal device to report the location information in a case that an event other than Event D1 is met.

4. The location information obtaining method of any one of claims 1 to 3, further comprising:
sending second configuration information to the terminal device, wherein the second configuration information is configured to indicate the terminal device to report a measurement result carrying the location information.

5. The location information obtaining method of claim 4, further comprising:
sending a report event to the terminal device, wherein the second configuration information is used to indicate the terminal device to report the measurement result carrying the location information in a case that the report event is met.

6. The location information obtaining method of claim 5, wherein the report event comprises a periodic measurement report event and/or an event-triggered report event.

7. The location information obtaining method of claim 5, wherein the report event comprises Event D1.

8. The location information obtaining method of any one of claims 5 to 7, further comprising:
receiving the measurement result reported by the terminal device in a case that the report event is met, wherein the measurement result comprises at least one of:
coarse-grained Global Navigation Satellite System (GNSS) location information;
complete GNSS location information; or
indication information indicating that there is no available location.

9. The location information obtaining method of claim 8, further comprising:
sending first indication information to the terminal device, wherein the first indication information is used to indicate the terminal device to report the measurement result carrying the coarse-grained GNSS location information.

10. The location information obtaining method of any one of claims 1 to 9, wherein the first configuration information is first location indication information obtainCommonLocation or second location indication information obtainLocation.

11. The location information obtaining method of any one of claims 1 to 10, further comprising:
sending third configuration information to the terminal device, wherein the third configuration information is used to indicate the terminal device to obtain detailed location information in a case that a specific event is met, wherein the specific event comprises at least one of:
triggering a recording of a Radio Link Failure (RLF) report;
reporting Master Cell Group (MCG) failure information;
reporting Secondary Cell Group (SCG) failure information;
triggering a recording of Random Access (RA) report;
triggering a recording of a handover success report;
triggering a recording of Primary Secondary cell (PScell) addition success report; or
triggering a recording of a PScell change success report.

12. The location information obtaining method of claim 11, wherein the third configuration information comprises: a plurality of second indication information,
wherein in a case that there is a plurality of types of specific events, each second indication information corresponds to one type of specific event; or
in a case that there is a plurality of types of specific events, the plurality of types of specific events is divided into a plurality of specific event groups, and each second indication information corresponds to one specific event group.

13. The location information obtaining method of claim 11 or 12, wherein the third configuration information is first location indication information obtainCommonLocation or second location indication information obtainLocation.

14. A location information obtaining method, executed by a terminal device, comprising:
receiving first configuration information sent by a network side device, wherein the first configuration information is sent by the network side device in a case that a condition for obtaining location information is met, and the first configuration information is used to indicate the terminal device to obtain detailed location information.

15. The location information obtaining method of claim 14, wherein the condition for obtaining the location information comprises at least one of:
that a purpose of indicating, by the network side device, the terminal device to report the location information is MDT;
that a purpose of indicating, by the network side device, the terminal device to report the location information is SON;
that the network side device indicates the terminal device to report the location information and the terminal device communicates with the network side device in a mode other than NTN; or
that the network side device indicates the terminal device to report the location information in a case that an event other than Event D1 is met.

16. The location information obtaining method of claim 14 or 15, further comprising:
receiving second configuration information sent by the network side device, wherein the second configuration information is used to indicate the terminal device to report a measurement result carrying the location information.

17. The location information obtaining method of claim 16, further comprising:
receiving a report event sent by the network side device, wherein the second configuration information is used to indicate the terminal device to report the measurement result carrying the location information in a case that the report event is met.

18. The location information obtaining method of claim 17, wherein the report event comprises a periodic measurement report event and/or an event-triggered report event.

19. The location information obtaining method of claim 17, wherein the report event comprises Event D1.

20. The location information obtaining method of any one of claims 17 to 19, further comprising:
reporting the measurement result to the network side device in a case that the report event is met, wherein the measurement result comprises at least one of:
coarse-grained GNSS location information;
complete GNSS location information; or
indication information indicating that there is no available location.

21. The location information obtaining method of claim 20, further comprising:
receiving first indication information sent by the network side device, wherein the first indication information is used to indicate the terminal device to report the measurement result carrying the coarse-grained GNSS location information.

22. The location information obtaining method of any one of claims 16 to 21, wherein the first configuration information is first location indication information obtainCommonLocation or second location indication information obtainLocation.

23. The location information obtaining method of any one of claims 14 to 22, further comprising:
receiving third configuration information sent by the network side device, wherein the third configuration information is used to indicate the terminal device to obtain detailed location information in a case that a specific event is met, wherein the specific event comprises at least one of:
triggering a recording of a RLF report;
reporting MCG failure information;
reporting SCG failure information;
triggering a recording of RA report;
triggering a recording of a handover success report;
triggering a recording of PScell addition success report; or
triggering a recording of a PScell change success report.

24. The location information obtaining method of claim 23, wherein the third configuration information comprises a plurality of second indication information,
wherein in a case that there is a plurality of types of specific events, each second indication information corresponds to one type of specific event; or
in a case that there is a plurality of types of specific events, the plurality of types of specific events is divided into a plurality of specific event groups, and each second indication information corresponds to one specific event group.

25. The location information obtaining method of claim 23 or 24, wherein the third configuration information is first location indication information obtainCommonLocation or second location indication information obtainLocation.

26. A communication apparatus, applied to a network side device, comprising:
a processing module configured to determine whether or not a condition for obtaining location information is met; and
a transceiver module configured to, in response to the condition for obtaining the location information being not met, stop sending first configuration information to a terminal device, wherein the first configuration information is used to indicate the terminal device to obtain detailed location information.

27. A communication apparatus, applied to a terminal device, comprising:
a transceiver module configured to receive first configuration information sent by a network side device, wherein the first configuration information is sent by the network side device in a case that a condition for obtaining location information is met, and the first configuration information is used to indicate the terminal device to obtain detailed location information.

28. A communication apparatus, comprising a processor and a memory, wherein the memory is configured to store therein a computer program, and the processor is configured to execute the computer program stored in the memory to implement the location information obtaining method of any one of claims 1 to 13, or the processor is configured to execute the computer program stored in the memory to implement the location information obtaining method of any one of claims 14 to 25.

29. A communication apparatus, comprising a processor and an interface circuit, wherein the interface circuit is configured to receive a code instruction and transmit the code instruction to the processor, wherein the processor is configured to execute the code instruction to implement the location information obtaining method of any one of claims 1 to 13, or execute the code instruction to implement the location information obtaining method of any one of claims 14 to 25.

30. A computer-readable storage medium storing therein an instruction, wherein the instruction is executed to implement the location information obtaining method of any one of claims 1 to 13, or the instruction is executed to implement the location information obtaining method of any one of claims 14 to 25.
